# EUROPEAN PATENT APPLICATION

(11) **EP 4 742 615 A1**
(43) Date of publication of application: **13.05.2026**
(21) Application number: 24848030.3
(22) Date of filing: 17.07.2024
(51) Int. Cl.: H04L 43/0852

(54) **COMMUNICATION METHOD AND DEVICE**

(30) Priority: 01.08.2023 CN 202310965731
(71) Applicant: Huawei Technologies Co., Ltd., Shenzhen, Guangdong 518129 (CN)
(72) Inventor: ZHANG, Zhonggang, Shenzhen, Guangdong 518129 (CN); HOU, Yanxiang, Shenzhen, Guangdong 518129 (CN); LI, Juchang, Shenzhen, Guangdong 518129 (CN); QIN, Yonggang, Shenzhen, Guangdong 518129 (CN); YAO, Bo, Shenzhen, Guangdong 518129 (CN)
(74) Representative: Pfenning, Meinig & Partner mbB
(86) International application number: PCT/CN2024/105921
(87) International publication number: WO 2025/026071

(57) **Abstract**

This application provides a communication method and a related device, to indicate, on a transmission path of a packet, different network measurement technologies by using information at different positions of the packet, so that communication devices on the path can implement network measurement based on the different network measurement technologies. In this method, a first device receives a first packet. The first packet includes first information, and the first information indicates to perform first network measurement on the first packet. The first device sends a second packet based on the first packet. The second packet includes second information, and the second information indicates to perform second network measurement on the second packet. A first position of the first information in the first packet is different from a second position of the second information in the second packet.

## Description

This application claims priority to Chinese Patent Application No. 202310965731.9, filed with the China National Intellectual Property Administration on August 1, 2023 and entitled "COMMUNICATION METHOD AND DEVICE", which is incorporated herein by reference in its entirety.

### TECHNICAL FIELD

This application relates to the field of communication technologies, and in particular, to a communication method and a device.

### BACKGROUND

With development of communication networks, network measurement is very important for network management and optimization. For example, network status monitoring, network fault analysis, network security defense, and even network intelligence all depend on the network measurement.

Currently, the network measurement may be implemented by using a plurality of network measurement technologies such as in-situ flow information telemetry (In-Situ flow information telemetry, IFIT), in-band flow analyzer (In-band flow analyzer, IFA), or in-band network telemetry (In-band network telemetry, INT). In a network transmission process of a packet, communication devices (for example, forwarding devices) on a path of the packet need to record measurement results based on a same network measurement technology, to implement network measurement. In other words, in an implementation process of the network measurement, the communication devices on the path of the packet need to support the same network measurement technology.

However, in a communication network, different communication devices may support different network measurement technologies. As a result, communication devices on a path of a packet cannot perform network measurement based on a same network measurement technology. Consequently, the network measurement fails.

### SUMMARY

This application provides a communication method and a related device, to indicate, on a transmission path of a packet, different network measurement technologies by using information at different positions of the packet, so that communication devices on the path can implement network measurement based on the different network measurement technologies.

A first aspect of this application provides a communication method. The method is performed by a first device, the method is performed by a part of components (for example, a processor, a chip, or a chip system) in the first device, or the method may be implemented by a logical module or software that can implement all or a part of functions of the first device. In the first aspect and a possible implementation of the first aspect, an example in which the method is performed by the first device is used for description. The first device may be a communication device like a router (router), a switch (switch), a firewall (Firewall), a virtual switch (virtual switch), a virtual router (virtual router), or an intelligent network interface card. In this method, the first device receives a first packet. The first packet includes first information, and the first information indicates to perform first network measurement on the first packet. The first device sends a second packet based on the first packet. The second packet includes second information, and the second information indicates to perform second network measurement on the second packet. A first position of the first information in the first packet is different from a second position of the second information in the second packet.

According to the foregoing technical solution, the first packet received by the first device includes the first information indicating to perform the first network measurement on the first packet. Then, the second packet sent by the first device based on the first packet includes the second information indicating to perform the second network measurement on the second packet. The first position of the first information in the first packet is different from the second position of the second information in the second packet. In addition, different network measurement technologies are usually indicated by information (for example, fields/headers) at different positions in a packet. In other words, in a packet transmission process, for the first device and/or previous N (N is a positive integer) devices of the first device, a device supporting the first network measurement may perform, based on the first information at the first position in the packet, network measurement corresponding to a network measurement technology. In addition, for the first device and/or next M (M is a positive integer) devices of the first device, a device supporting the second network measurement may perform, based on the second information at the second position in the packet, network measurement corresponding to another network measurement technology. Therefore, compared with an implementation in which communication devices (for example, forwarding devices) on a path of a packet perform network measurement based only on a same network measurement technology, in the foregoing technical solution, on a packet transmission path, different network measurement technologies are indicated by information at different positions of a packet, so that communication devices on the path can implement network measurement based on the different network measurement technologies.

In this application, information indicating to perform network measurement on a packet may be located in a header of the packet. For example, the first information may be located in a header of the first packet, and the second information may also be located in a header of the second packet. One header may usually include one or more fields. In the first packet, the first information may be carried in the header of the first packet and/or a field in the header of the first packet. Correspondingly, the first position of the first information in the first packet may be understood as a position of the header in the first packet and/or a position of the field in the header of the first packet. Similarly, in the second packet, the second information may be carried in the header of the second packet and/or a field in the header of the second packet. Correspondingly, the second position of the second information in the second packet may be understood as a position of the header in the second packet and/or a position of the field in the header of the second packet.

In other words, that the first position of the first information in the first packet is different from the second position of the second information in the second packet may be understood as that the header used to carry the first information in the first packet is different from the header used to carry the second information in the second packet. And/or, that the first position of the first information in the first packet is different from the second position of the second information in the second packet may be understood as that the header used to carry the first information in the first packet is the same as the header used to carry the second information in the second packet, and the field carrying the first information in the header of the first packet is different from the field carrying the second information in the header of the second packet.

It should be understood that a process in which the first device sends the second packet based on the first packet may be understood as follows: On a transmission path of the first packet, the first device serves as a forwarding device (a forwarding node, a routing forwarding device, or the like) on the transmission path. When the first device receives the first packet and determines that the first packet needs to be forwarded, the first device modifies the first packet to the second packet, and sends the second packet to a next-hop node (for example, the second device mentioned below). In other words, a payload (payload) of the first packet may be the same as a payload of the second packet.

It should be understood that the first packet received by the first device may be from a third device on the packet transmission path. The third device may be a communication device like a router, a switch, a virtual machine, a virtual switch, or an intelligent network interface card. This is not limited herein. A source device of the first packet may be a server, a personal computer, a virtual machine, or the like. Optionally, the source device of the first packet may be the third device, may be a device directly connected to the third device, or may be a device connected to the third device through one or more hops. This is not limited herein.

Optionally, in a process in which the first device modifies the first packet to the second packet, the first device may add the second information based on the first information in the first packet to obtain the second packet, or the first device may map the first information in the first packet to the second information to obtain the second packet. The first device may delete the first information from the second packet, or may retain the first information. This is not limited herein.

In a possible implementation of the first aspect, the second packet further includes the first information, and the first information is at a first position in the second packet.

According to the foregoing technical solution, in addition to the second information, the second packet sent by the first device may further include the first information indicating to perform the first network measurement on the second packet, so that a receiver of the second packet can perform the network measurement based on the first information and/or the second information.

In addition, for the receiver of the second packet, when the second packet includes the first information and the second information, the receiver can perform, based on a network configuration preference, a capability preference, or the like, at least one of network measurement processes corresponding to the first information and the second information. Compared with the implementation in which the communication devices (for example, the forwarding devices) on the path of the packet perform the network measurement based only on the same network measurement technology, flexibility of network measurement implementation can be improved.

It should be understood that, when the first packet and the second packet each include the first information, the position of the first information in the first packet may be the same as the position of the second information in the second packet. Correspondingly, the header used to carry the first information in the first packet may be the same as the header used to carry the first information in the second packet. Alternatively, the header used to carry the first information in the first packet may be the same as the header used to carry the first information in the second packet, and the field carrying the first information in the header of the first packet is the same as the field carrying the first information in the header of the second packet.

In a possible implementation of the first aspect, the first packet further includes a first measurement result, and the first measurement result includes a measurement result obtained based on the first information. The second packet further includes a second measurement result, and the second measurement result is obtained by processing the first measurement result.

According to the foregoing technical solution, after a communication device on a packet transmission path performs network measurement to obtain a measurement result, a packet forwarded by the communication device may include the measurement result. In other words, the first packet received by the first device may include the measurement result obtained based on the first information. Correspondingly, the second packet sent by the first device based on the first packet may include the second measurement result obtained by processing the first measurement result. In other words, when a network measurement technology indicated by the first information in the first packet is modified to another network measurement technology indicated by the second information in the second packet, a measurement result carried in the second packet may indicate (or include) the first measurement result, to avoid a loss of the measurement result and improve network measurement performance.

Optionally, the first device may perform the network measurement based on the first information and/or the second information, to obtain a third measurement result. In the process in which the first device modifies the first packet to the second packet, the first device may process (or map) the third measurement result and the first measurement result obtained based on the network measurement technology indicated by the first information to the second measurement result obtained based on the another network measurement technology indicated by the second information. For example, the second measurement result may include original measurement data of the third measurement result and original measurement data of the first measurement result. For another example, the second measurement result may include a combined measurement result obtained by performing combination processing (for example, weighted averaging or summation averaging) on the third measurement result and the first measurement result.

In a possible implementation of the first aspect, the method further includes: The first device sends the third measurement result to a controller. The third measurement result is obtained based on the first information and/or the second information.

According to the foregoing technical solution, after a communication device on a packet transmission path performs network measurement to obtain a measurement result, the communication device may send the measurement result to the controller, so that the controller performs, based on measurement results from a plurality of communication devices, network analysis corresponding to the network measurement. Therefore, after the first device performs the network measurement based on the first information and/or the second information to obtain the third measurement result, the first device may send the third measurement result to the controller, so that the controller can subsequently perform network analysis corresponding to the network measurement.

Optionally, the controller is configured to: receive measurement results measured by a plurality of network devices, and perform network analysis. The controller may be a device like a server or a virtual machine (or the controller may be a software system running on the device like the server or the virtual machine). The controller may have another name, for example, a network management device, a network management system, network management software, an analyzer, a network analyzer, a network measurement analyzer, or a network quality analyzer.

In a possible implementation of the first aspect, the first information or the second information includes at least one of the following: delay detection information, path detection information, and packet loss detection information.

According to the foregoing technical solution, the first information or the second information indicating the network measurement may include at least one of the foregoing information, so that the network measurement may include one or more of delay detection, path detection, and packet loss detection, to provide a plurality of network measurement manners.

It should be noted that, when the first information or the second information includes different information content, the first information or the second information may perform network measurement on a packet in a plurality of manners.

In an implementation example, the first information is used as an example. When the first information includes the delay detection information and/or the packet loss detection information, that the first information indicates to perform the first network measurement on the first packet may be understood as that the delay detection information and/or the packet loss detection information in the first information indicate/indicates to perform network measurement for delay detection and/or network measurement for packet loss detection on the first packet.

In another implementation example, the first information is still used as an example. When the first information includes the path detection information, that the first information indicates to perform the first network measurement on the first packet may be understood as that the path detection information in the first information indicates to perform network measurement for path detection on a packet flow (or a data flow) of the first packet.

Optionally, the path detection information is carried in one field (for example, a field in a header) or carried in one header.

Optionally, the delay detection information and the packet loss detection information may be carried in different fields. For example, when the first information or the second information includes the delay detection information, the path detection information, and the packet loss detection information, the three pieces of information may be carried in a same header, that is, the three pieces of information are respectively carried in three different fields in the same header.

In a possible implementation of the first aspect, the first position or the second position is in any one of the following: an internet protocol version 4 (internet protocol version 4, IPv4) header, an internet protocol version 6 (internet protocol version 6, IPv6) header, a virtual extensible local area network (virtual extensible local area network, VXLAN) header, a generic routing encapsulation (generation routing encapsulation, GRE) header, a generic network virtualization encapsulation (generic network virtualization encapsulation, GENEVE) header, an in-band flow analyzer (In-band flow analyzer, IFA) header, an in-band flow analyzer metadata (IFA Metadata) header, an in-situ flow information telemetry (In-Situ flow information telemetry, IFIT) header, an in-situ operation, administration, and maintenance trace option-types (In-Situ operation, administration, and maintenance Trace Option-Types, IOAM Trace Option-Types) header, an in-situ operation, administration, and maintenance direct exporting option-types (In-Situ operation, administration, and maintenance direct exporting Option-Types, IOAM DEX Option-Type) header, an IPv6 extension header, and a GENEVE extension header.

According to the foregoing technical solution, the first position of the first information in the first packet or the second position of the second information in the second packet may be implemented by using any one of the foregoing. In other words, the first information or the second information may be located in one of the foregoing plurality of headers, to improve flexibility of solution implementation.

In a possible implementation of the first aspect, the first position and the first information meet any one of the following:
when the first position is in an IPv4 header, the first information is carried in at least one of a differentiated services code point (differentiated services code point, DSCP) field, an explicit congestion notification (explicit congestion notification, ECN) field, or a flags (Flags) field;
when the first position is in an IPv6 header, the first information is carried in a traffic type (Traffic Class) field;
when the first position is in a VXLAN header, the first information is carried in at least one of an R bit and a reserved (Reserved) field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an options (Options) field; or
when the first position is in a GENEVE extension header, the first information is carried in an option data (Option Data) field.

In a possible implementation of the first aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

According to the foregoing technical solution, the first position of the first information in the first packet or the second position of the second information in the second packet may be in one of a plurality of different headers. The first information or the second information may be carried in a corresponding field in the header, to provide specific implementations of the first information and the second information.

In a possible implementation of the first aspect, the method further includes: The first device receives third information. The third information indicates that a next-hop node has a capability of performing the second network measurement based on the second information and/or the third information indicates that the next-hop node does not have a capability of performing the first network measurement based on the first information. The third information is from the next-hop node or the controller.

According to the foregoing technical solution, the first device may further receive the third information, and determine a capability of the next-hop node based on the third information. Correspondingly, when the first device determines that the next-hop node has the capability of performing the second network measurement based on the second information and/or the next-hop node does not have the capability of performing the first network measurement based on the first information, after receiving the first packet, the first device may modify the first packet carrying the first information to the second packet carrying the second information, so that the next-hop node can perform the network measurement based on the second information, to avoid a measurement failure.

A second aspect of this application provides a communication method. The method is performed by a first device, the method is performed by a part of components (for example, a processor, a chip, or a chip system) in the first device, or the method may be implemented by a logical module or software that can implement all or a part of functions of the first device. In the second aspect and a possible implementation of the second aspect, an example in which the method is performed by the first device is used for description. The first device may be a communication device like a router, a switch, a virtual machine, a virtual switch, or an intelligent network interface card. In this method, the first device determines a first packet. The first packet includes first information and second information. The first information indicates to perform first network measurement on the first packet. The second information indicates to perform second network measurement on the first packet. A first position of the first information in the first packet is different from a second position of the second information in the first packet. The first device sends the first packet.

According to the foregoing technical solution, the first packet sent by the first device includes the first information indicating to perform the first network measurement on the first packet. The first packet further includes the second information indicating to perform the second network measurement on the second packet. The first position of the first information in the first packet is different from the second position of the first information in the second packet. In addition, different network measurement technologies are usually indicated by information (for example, fields/headers) at different positions in a packet. In other words, in a packet transmission process, for the first device and/or next M (M is a positive integer) devices of the first device, a device supporting the first network measurement may perform, based on the first information at the first position in the packet, network measurement corresponding to a network measurement technology, and a device supporting the second network measurement may perform, based on the second information at the second position in the packet, network measurement corresponding to another network measurement technology. Therefore, compared with an implementation in which communication devices (for example, forwarding devices) on a path of a packet perform network measurement based only on a same network measurement technology, in the foregoing technical solution, on a packet transmission path, different network measurement technologies are indicated by information at different positions of a packet, so that communication devices on the path can implement network measurement based on the different network measurement technologies.

In addition, for a receiver of the first packet, when the first packet includes the first information and the second information, the receiver can perform, based on a network configuration preference, a capability preference, or the like, at least one of network measurement processes corresponding to the first information and the second information. Compared with the implementation in which the communication devices (for example, the forwarding devices) on the path of the packet perform the network measurement based only on the same network measurement technology, flexibility of network measurement implementation can be improved.

In a possible implementation of the second aspect, the method further includes: The first device receives a third packet. The third packet does not include the first information and/or the second information. That the first device determines the first packet includes: The first device determines the first packet based on the third packet.

According to the foregoing technical solution, after the first device receives the third packet that does not include the first information and/or the second information, the first device may determine the first packet based on the third packet, that is, the first device may obtain the first packet after adding the first information and/or the second information to the third packet, so that the receiver of the first packet can subsequently perform the network measurement based on the first information and/or the second information in the first packet.

In a possible implementation of the second aspect, when the third packet does not include the second information and the third packet includes the first information, the first packet includes a first measurement result obtained by processing a measurement result obtained based on the first information. Alternatively, when the third packet does not include the first information and the third packet includes the second information, the first packet includes a second measurement result obtained by processing a measurement result obtained based on the second information.

According to the foregoing technical solution, after a communication device on a packet transmission path performs network measurement to obtain a measurement result, a packet forwarded by the communication device may include the measurement result. In other words, when the third packet received by the first device includes the first information or the second information, the third packet may include the measurement result obtained based on the first information or the second information. Correspondingly, the first packet determined by the first device based on the third packet may include the first measurement result or the second measurement result obtained through processing based on the measurement result, to avoid a loss of the measurement result and improve network measurement performance.

It should be understood that, in the foregoing technical solution, the third packet received by the first device may be from a third device on the packet transmission path. The third device may be a communication device like a router, a switch, a virtual machine, a virtual switch, or an intelligent network interface card. This is not limited herein. A source device of the third packet may be a server, a personal computer, a virtual machine, or the like. Optionally, the source device of the third packet may be the third device, may be a device directly connected to the third device, or may be a device connected to the third device through one or more hops. This is not limited herein.

Optionally, the first packet may be determined by the first device based on the received third packet, or the first packet may be a packet locally generated by the first device. That is, the first device may serve as a source device of the first packet.

In a possible implementation of the second aspect, the method further includes: The first device sends a third measurement result to a controller. The third measurement result is obtained based on the first information and/or the second information.

According to the foregoing technical solution, after a communication device on a packet transmission path performs network measurement to obtain a measurement result, the communication device may send the measurement result to the controller, so that the controller performs, based on measurement results from a plurality of communication devices, network analysis corresponding to the network measurement. Therefore, after the first device performs the network measurement based on the first information and/or the second information to obtain the third measurement result, the first device may send the third measurement result to the controller, so that the controller can subsequently perform network analysis corresponding to the network measurement.

Optionally, the controller is configured to: receive measurement results measured by a plurality of network devices, and perform the network analysis. The controller may be a device like a server or a virtual machine. The controller may have another name, for example, a network management device, an analyzer, a network analyzer, a network measurement analyzer, or a network quality analyzer.

In a possible implementation of the second aspect, the first information or the second information includes at least one of the following: delay detection information, path detection information, and packet loss detection information.

According to the foregoing technical solution, the first information or the second information indicating the network measurement may include at least one of the foregoing information, so that the network measurement may include one or more of delay detection, path detection, and packet loss detection, to provide a plurality of network measurement manners.

It should be noted that, when the first information or the second information includes different information content, the first information or the second information may perform network measurement on a packet in a plurality of manners.

In an implementation example, the first information is used as an example. When the first information includes the delay detection information and/or the packet loss detection information, that the first information indicates to perform the first network measurement on the first packet may be understood as that the delay detection information and/or the packet loss detection information in the first information indicate/indicates to perform network measurement for delay detection and/or network measurement for packet loss detection on the first packet.

In another implementation example, the first information is still used as an example. When the first information includes the path detection information, that the first information indicates to perform the first network measurement on the first packet may be understood as that the path detection information in the first information indicates to perform network measurement for path detection on a packet flow (or a data flow) of the first packet.

Optionally, the path detection information is carried in one field (for example, a field in a header) or carried in one header.

Optionally, the delay detection information and the packet loss detection information may be carried in different fields. For example, when the first information or the second information includes the delay detection information, the path detection information, and the packet loss detection information, the three pieces of information may be carried in a same header, that is, the three pieces of information are respectively carried in three different fields in the same header.

In a possible implementation of the second aspect, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

According to the foregoing technical solution, the first position of the first information in the first packet or the second position of the second information in the first packet may be implemented by using any one of the foregoing. In other words, the first information or the second information may be located in one of the foregoing plurality of headers, to improve flexibility of solution implementation.

In a possible implementation of the second aspect, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation of the second aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

According to the foregoing technical solution, the first position of the first information in the first packet or the second position of the second information in the first packet may be in one of a plurality of different headers. The first information or the second information may be carried in a corresponding field in the header, to provide specific implementations of the first information and the second information.

In a possible implementation of the second aspect, the method further includes: The first device receives third information. The third information indicates that a next-hop node has a capability of performing the second network measurement based on the second information and/or the third information indicates that the next-hop node has a capability of performing the first network measurement based on the first information. The third information is from the next-hop node or the controller.

Optionally, for the first device, the next-hop node may be the second device described below.

According to the foregoing technical solution, the first device may further receive the third information, and determine a capability of the next-hop node based on the third information. Correspondingly, when the first device determines that the next-hop node has the capability of performing the second network measurement based on the second information and/or the next-hop node has the capability of performing the first network measurement based on the first information, the first device may include the first information and the second information in the to-be-sent first packet, so that the next-hop node can perform the network measurement based on the first information and/or the second information, to avoid a measurement failure.

A third aspect of this application provides a communication method. The method is performed by a second device, the method is performed by a part of components (for example, a processor, a chip, or a chip system) in the second device, or the method may be implemented by a logical module or software that can implement all or a part of functions of the second device. In the third aspect and a possible implementation of the third aspect, an example in which the method is performed by the second device is used for description. The second device may be a communication device like a router, a switch, a virtual machine, a virtual switch, or an intelligent network interface card. In this method, the second device receives a first packet. The first packet includes first information and second information. The first information indicates to perform first network measurement on the first packet. The second information indicates to perform second network measurement on the first packet. A first position of the first information in the first packet is different from a second position of the second information in the first packet. The second device performs the first network measurement based on the first information, and/or performs the second network measurement based on the second information.

According to the foregoing technical solution, the first packet received by the second device includes the first information indicating to perform the first network measurement on the first packet, and the first packet further includes the second information indicating to perform the second network measurement on the second packet. Then, the second device may perform the first network measurement based on the first information, and/or perform the second network measurement based on the second information. The first position of the first information in the first packet is different from the second position of the first information in the second packet. In addition, different network measurement technologies are usually indicated by information (for example, fields/headers) at different positions in a packet. In other words, in a packet transmission process, for the first device and/or next M (M is a positive integer) devices of the first device, a device supporting the first network measurement may perform, based on the first information at the first position in the packet, network measurement corresponding to a network measurement technology, and a device supporting the second network measurement may perform, based on the second information at the second position in the packet, network measurement corresponding to another network measurement technology. Therefore, compared with an implementation in which communication devices (for example, forwarding devices) on a path of a packet perform network measurement based only on a same network measurement technology, in the foregoing technical solution, on a packet transmission path, different network measurement technologies are indicated by information at different positions of a packet, so that communication devices on the path can implement network measurement based on the different network measurement technologies.

In addition, for the second device, when the first packet includes the first information and the second information, the second device can perform, based on a network configuration preference, a capability preference, or the like, at least one of network measurement processes corresponding to the first information and the second information. Compared with the implementation in which the communication devices (for example, the forwarding devices) on the path of the packet perform the network measurement based only on the same network measurement technology, flexibility of network measurement implementation can be improved.

In a possible implementation of the third aspect, the method further includes: The second device sends a second packet based on the first packet. The second packet includes the first information and/or the second information.

According to the foregoing technical solution, after the second device receives the first packet including the first information and the second information, the second device may send the second packet based on the first packet, and the second packet includes the first information and/or the second information, so that a receiver of the second packet can perform network measurement based on the first information and/or the second information.

Optionally, when a next-hop node of the second device is a destination device, because the next-hop node may not have a network measurement requirement or capability, the second packet sent by the second device based on the first packet may not include the first information and the second information.

Optionally, when a next-hop node of the second device is not a destination device, the second packet sent by the second device may be further forwarded by the next-hop node, so that the destination device obtains a payload in the second packet based on the forwarding by the next-hop node. Because the next-hop node may have a network measurement requirement or capability, the second device may determine, based on capability information of the next-hop node, whether the second packet carries the first information and/or the second information. For example, when the next-hop node has the capability of performing the first network measurement based on the first information, the second packet may include the first information. For another example, when the next-hop node has the capability of performing the second network measurement based on the second information, the second packet may include the first information.

In a possible implementation of the third aspect, the first packet further includes a first measurement result and/or a second measurement result. The first measurement result includes a measurement result obtained based on the first information, and the second measurement result includes a measurement result obtained based on the second information. The second packet further includes a third measurement result. The third measurement result is obtained by processing the first measurement result and/or the second measurement result.

According to the foregoing technical solution, after a communication device on a packet transmission path performs network measurement to obtain a measurement result, a packet forwarded by the communication device may include the measurement result. In other words, the first packet received by the second device may include the measurement result obtained based on the first information and/or the second information. Correspondingly, the second packet sent by the second device based on the first packet may include the third measurement result obtained through processing based on the measurement result, to avoid a loss of the measurement result and improve network measurement performance.

Optionally, the second device may perform the network measurement based on the first information and/or the second information, to obtain a local measurement result. In a process in which the second device modifies the first packet to the second packet, the first device may process the local measurement result and the first measurement result obtained based on the first information and/or the second measurement result obtained based on the second information, to obtain the third measurement result.

In a possible implementation of the third aspect, the method further includes: The second device sends the third measurement result to a controller. The third measurement result is obtained based on the first information and/or the second information.

According to the foregoing technical solution, after a communication device on a packet transmission path performs network measurement to obtain a measurement result, the communication device may send the measurement result to the controller, so that the controller performs, based on measurement results from a plurality of communication devices, network analysis corresponding to the network measurement. Therefore, after the second device performs the network measurement based on the first information and/or the second information to obtain the third measurement result, the second device may send the third measurement result to the controller, so that the controller can subsequently perform network analysis corresponding to the network measurement.

In a possible implementation of the third aspect, the first information or the second information includes at least one of the following: delay detection information, path detection information, and packet loss detection information.

According to the foregoing technical solution, the first information or the second information indicating the network measurement may include at least one of the foregoing information, so that the network measurement may include one or more of delay detection, path detection, and packet loss detection, to provide a plurality of network measurement manners.

It should be noted that, when the first information or the second information includes different information content, the first information or the second information may perform network measurement on a packet in a plurality of manners.

In an implementation example, the first information is used as an example. When the first information includes the delay detection information and/or the packet loss detection information, that the first information indicates to perform the first network measurement on the first packet may be understood as that the delay detection information and/or the packet loss detection information in the first information indicate/indicates to perform network measurement for delay detection and/or network measurement for packet loss detection on the first packet.

In another implementation example, the first information is still used as an example. When the first information includes the path detection information, that the first information indicates to perform the first network measurement on the first packet may be understood as that the path detection information in the first information indicates to perform network measurement for path detection on a packet flow (or a data flow) of the first packet.

Optionally, the path detection information is carried in one field (for example, a field in a header) or carried in one header.

Optionally, the delay detection information and the packet loss detection information may be carried in different fields. For example, when the first information or the second information includes the delay detection information, the path detection information, and the packet loss detection information, the three pieces of information may be carried in a same header, that is, the three pieces of information are respectively carried in three different fields in the same header.

In a possible implementation of the third aspect, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

According to the foregoing technical solution, the first position of the first information in the first packet or the second position of the second information in the second packet may be implemented by using any one of the foregoing. In other words, the first information or the second information may be located in one of the foregoing plurality of headers, to improve flexibility of solution implementation.

In a possible implementation of the third aspect, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation of the third aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

According to the foregoing technical solution, the first position of the first information in the first packet or the second position of the second information in the second packet may be in one of a plurality of different headers. The first information or the second information may be carried in a corresponding field in the header, to provide specific implementations of the first information and the second information.

In a possible implementation of the third aspect, the method further includes: The second device sends third information. The third information indicates that the second device has a capability of performing the second network measurement based on the second information and/or the third information indicates that the second device has a capability of performing the first network measurement based on the first information.

According to the foregoing technical solution, the second device may further send third information to a previous-hop node (for example, the first device), so that the previous-hop node can determine a capability of the second device based on the third information. Correspondingly, when the first device determines that the next-hop node has the capability of performing the second network measurement based on the second information and/or the next-hop node has the capability of performing the first network measurement based on the first information, the first device may include the first information and the second information in the to-be-sent first packet, so that the next-hop node can perform the network measurement based on the first information and/or the second information, to avoid a measurement failure.

A fourth aspect of this application provides a communication apparatus. The apparatus can implement the method according to any one of the first aspect or the possible implementations of the first aspect. The apparatus includes a corresponding unit or module configured to perform the method. The unit or module included in the apparatus can be implemented by software and/or hardware. For example, the apparatus may be a first device, the apparatus may be a component (for example, a processor, a chip, or a chip system) in the first device, or the apparatus may be a logical module or software that can implement all or a part of functions of the first device.

The apparatus includes a transceiver unit and a processing unit. The transceiver unit is configured to receive a first packet. The first packet includes first information, and the first information indicates to perform first network measurement on the first packet. The processing unit is configured to determine a second packet based on the first packet. The transceiver unit is further configured to send the second packet. The second packet includes second information, the second information indicates to perform second network measurement on the second packet, and a first position of the first information in the first packet is different from a second position of the second information in the second packet.

In a possible implementation of the fourth aspect, the second packet further includes the first information, and the first information is at a first position in the second packet.

In a possible implementation of the fourth aspect, the first packet further includes a first measurement result, and the first measurement result includes a measurement result obtained based on the first information. The second packet further includes a second measurement result, and the second measurement result is obtained by processing the first measurement result.

In a possible implementation of the fourth aspect, the transceiver unit is further configured to send a third measurement result to a controller. The third measurement result is obtained based on the first information and/or the second information.

In a possible implementation of the fourth aspect, the first information or the second information includes at least one of the following: delay detection information, path detection information, and packet loss detection information.

In a possible implementation of the fourth aspect, the path detection information is carried in one field or carried in one header.

In a possible implementation of the fourth aspect, the first position or the second position is in any one of the following: an internet protocol version 4 IPv4 header, an internet protocol version 6 IPv6 header, a virtual extensible local area network VXLAN header, a generic routing encapsulation GRE header, a generic network virtualization encapsulation GENEVE header, an in-band flow analyzer IFA header, an in-band flow analyzer metadata IFA Metadata header, an in-situ flow information telemetry IFIT header, an in-situ operation, management, and maintenance trace option-types IOAM Trace Option-Types header, an IOAM DEX Option-Type header, an IPv6 extension header, and a GENEVE extension header.

In a possible implementation of the fourth aspect, the first position and the first information meet any one of the following:
when the first position is in an IPv4 header, the first information is carried in at least one of a differentiated services code point DSCP field, an explicit congestion notification ECN field, or a flags Flags field;
when the first position is in an IPv6 header, the first information is carried in a traffic type Traffic Class field;
when the first position is in a VXLAN header, the first information is carried in at least one of an R bit and a reserved Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an options Options field; or
when the first position is in a GENEVE extension header, the first information is carried in an option data Option Data field.

In a possible implementation of the fourth aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation of the fourth aspect, the transceiver unit is further configured to receive third information. The third information indicates that a next-hop node has a capability of performing the second network measurement based on the second information and/or the third information indicates that the next-hop node does not have a capability of performing the first network measurement based on the first information. The third information is from the next-hop node or the controller.

A fifth aspect of this application provides a communication apparatus. The apparatus can implement the method according to any one of the second aspect or the possible implementations of the second aspect. The apparatus includes a corresponding unit or module configured to perform the method. The unit or module included in the apparatus can be implemented by software and/or hardware. For example, the apparatus may be a first device, the apparatus may be a component (for example, a processor, a chip, or a chip system) in the first device, or the apparatus may be a logical module or software that can implement all or a part of functions of the first device.

The apparatus includes a transceiver unit and a processing unit. The processing unit is configured to determine a first packet. The first packet includes first information and second information. The first information indicates to perform first network measurement on the first packet. The second information indicates to perform second network measurement on the first packet. A first position of the first information in the first packet is different from a second position of the second information in the first packet. The transceiver unit is configured to send the first packet.

In a possible implementation of the fifth aspect, the transceiver unit is further configured to receive a third packet. The third packet does not include the first information and/or the second information. That the processing unit is configured to determine the first packet includes: The processing unit is configured to determine the first packet based on the third packet.

In a possible implementation of the fifth aspect, when the third packet does not include the second information and the third packet includes the first information, the first packet includes a first measurement result obtained by processing a measurement result obtained based on the first information. Alternatively, when the third packet does not include the first information and the third packet includes the second information, the first packet includes a second measurement result obtained by processing a measurement result obtained based on the second information.

In a possible implementation of the fifth aspect, the processing unit is further configured to send a third measurement result to a controller. The third measurement result is obtained based on the first information and/or the second information.

In a possible implementation of the fifth aspect, the first information or the second information includes at least one of the following: delay detection information, path detection information, and packet loss detection information.

In a possible implementation of the fifth aspect, the path detection information is carried in one field or carried in one header.

In a possible implementation of the fifth aspect, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

In a possible implementation of the fifth aspect, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation of the fifth aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation of the fifth aspect, the processing unit is further configured to receive third information. The third information indicates that a next-hop node has a capability of performing the second network measurement based on the second information and/or the third information indicates that the next-hop node has a capability of performing the first network measurement based on the first information. The third information is from the next-hop node or the controller.

A sixth aspect of this application provides a communication apparatus. The apparatus can implement the method according to any one of the third aspect or the possible implementations of the third aspect. The apparatus includes a corresponding unit or module configured to perform the method. The unit or module included in the apparatus can be implemented by software and/or hardware. For example, the apparatus may be a second device, the apparatus may be a component (for example, a processor, a chip, or a chip system) in the second device, or the apparatus may be a logical module or software that can implement all or a part of functions of the second device.

The apparatus includes a transceiver unit and a processing unit. The transceiver unit is configured to receive a first packet. The first packet includes first information and second information. The first information indicates to perform first network measurement on the first packet. The second information indicates to perform second network measurement on the first packet. A first position of the first information in the first packet is different from a second position of the second information in the first packet. The processing unit is configured to: perform the first network measurement based on the first information, and/or perform the second network measurement based on the second information.

In a possible implementation of the sixth aspect, the transceiver unit is further configured to send a second packet based on the first packet. The second packet includes the first information and/or the second information.

In a possible implementation of the sixth aspect, the first packet further includes a first measurement result and/or a second measurement result. The first measurement result includes a measurement result obtained based on the first information, and the second measurement result includes a measurement result obtained based on the second information. The second packet further includes a third measurement result. The third measurement result is obtained by processing the first measurement result and/or the second measurement result.

In a possible implementation of the sixth aspect, the transceiver unit is further configured to send the third measurement result to a controller. The third measurement result is obtained based on the first information and/or the second information.

In a possible implementation of the sixth aspect, the first information or the second information includes at least one of the following: delay detection information, path detection information, and packet loss detection information.

In a possible implementation of the sixth aspect, the path detection information is carried in one field or carried in one header.

In a possible implementation of the sixth aspect, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

In a possible implementation of the sixth aspect, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation of the sixth aspect, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation of the sixth aspect, the transceiver unit is further configured to send third information. The third information indicates that the second device has a capability of performing the second network measurement based on the second information and/or the third information indicates that the second device has a capability of performing the first network measurement based on the first information.

A seventh aspect of this application provides a communication apparatus. The communication apparatus includes at least one processor. The at least one processor is configured to execute a program or instructions stored in a memory, to enable the apparatus to implement the method according to any one of the first aspect or the possible implementations of the first aspect.

An eighth aspect of this application provides a communication apparatus. The communication apparatus includes at least one processor. The at least one processor is configured to execute a program or instructions stored in a memory, to enable the apparatus to implement the method according to any one of the second aspect or the possible implementations of the second aspect.

A ninth aspect of this application provides a communication apparatus. The communication apparatus includes at least one processor. The at least one processor is configured to execute a program or instructions stored in a memory, to enable the apparatus to implement the method according to any one of the third aspect or the possible implementations of the third aspect.

A tenth aspect of this application provides a communication apparatus, including at least one logic circuit and an input/output interface. The logic circuit is configured to perform the method according to any one of the first aspect or the possible implementations of the first aspect.

An eleventh aspect of this application provides a communication apparatus, including at least one logic circuit and an input/output interface. The logic circuit is configured to perform the method according to any one of the second aspect or the possible implementations of the second aspect.

A twelfth aspect of this application provides a communication apparatus, including at least one logic circuit and an input/output interface. The logic circuit is configured to perform the method according to any one of the third aspect or the possible implementations of the third aspect.

A thirteenth aspect of this application provides a computer-readable storage medium, configured to store computer instructions. When the computer instructions are executed by a processor, the processor performs the method according to any one of the first aspect or the possible implementations of the first aspect, the processor performs the method according to any one of the second aspect or the possible implementations of the second aspect, or the processor performs the method according to any one of the third aspect or the possible implementations of the third aspect.

A fourteenth aspect of this application provides a computer program product (or referred to as a computer program). The computer program product includes instructions. When the instructions in the computer program product are executed by a processor, the processor performs the method according to any one of the first aspect or the possible implementations of the first aspect, the processor performs the method according to any one of the second aspect or the possible implementations of the second aspect, or the processor performs the method according to any one of the third aspect or the possible implementations of the third aspect.

A fifteenth aspect of this application provides a chip system. The chip system includes a communication interface and a processor. The communication interface is coupled to the processor, and is configured to support a communication apparatus in implementing a function in any one of the first aspect or the possible implementations of the first aspect, is configured to support the communication apparatus in implementing a function in any one of the second aspect or the possible implementations of the second aspect, or is configured to support the communication apparatus in implementing a function in any one of the third aspect or the possible implementations of the third aspect.

In a possible design, the chip system may further include a memory. The memory is configured to store to program instructions and data that are necessary for the communication apparatus. The chip system may include a chip, or may include the chip and another discrete device. Optionally, the chip system further includes an interface circuit, and the interface circuit provides program instructions and/or data for the at least one processor.

A sixteenth aspect of this application provides a communication system. The communication system includes the communication apparatus according to the fourth aspect, the communication system includes the communication apparatus according to the fifth aspect and the communication apparatus according to the sixth aspect, the communication system includes the communication apparatus according to the seventh aspect, the communication system includes the communication apparatus according to the eighth aspect and the communication apparatus according to the ninth aspect, the communication system includes the communication apparatus according to the tenth aspect, or the communication system includes the communication apparatus according to the eleventh aspect and the communication apparatus according to the twelfth aspect.

Optionally, the communication system further includes another device in the foregoing implementations.

For technical effects achieved by any design manner of the fourth aspect to the sixteenth aspect, refer to technical effects achieved by different implementations of the first aspect to the third aspect. Details are not described herein again.

### BRIEF DESCRIPTION OF DRAWINGS

FIG. 1 is a diagram of an application scenario according to this application;
FIG. 2a is another diagram of an application scenario according to this application;
FIG. 2b is a diagram of a packet format according to this application;
FIG. 3 is another diagram of an application scenario according to this application;
FIG. 4 is an implementation diagram of a communication method according to this application;
FIG. 5a is another diagram of a packet format according to this application;
FIG. 5b is another diagram of a packet format according to this application;
FIG. 5c is another diagram of a packet format according to this application;
FIG. 5d is another diagram of a packet format according to this application;
FIG. 5e is another diagram of a packet format according to this application;
FIG. 5f is another diagram of a packet format according to this application;
FIG. 5g is another diagram of a packet format according to this application;
FIG. 5h is another diagram of a packet format according to this application;
FIG. 5i is another diagram of a packet format according to this application;
FIG. 5j is another diagram of a packet format according to this application;
FIG. 5k is another diagram of a packet format according to this application;
FIG. 5l is another diagram of a packet format according to this application;
FIG. 6a is another diagram of an application scenario according to this application;
FIG. 6b is another diagram of an application scenario according to this application;
FIG. 6c is another diagram of an application scenario according to this application;
FIG. 6d is a diagram of packet processing according to this application;
FIG. 6e is another diagram of packet processing according to this application;
FIG. 6f is another diagram of an application scenario according to this application;
FIG. 6g is another diagram of a packet format according to this application;
FIG. 6h is another diagram of a packet format according to this application;
FIG. 6i is another diagram of a packet format according to this application;
FIG. 6j is another diagram of a packet format according to this application;
FIG. 7a is another implementation diagram of a communication method according to this application;
FIG. 7b is another diagram of an application scenario according to this application;
FIG. 8 is a diagram of a communication apparatus according to this application; and
FIG. 9 is another implementation diagram of a communication apparatus according to this application.

### DESCRIPTION OF EMBODIMENTS

The following describes technical solutions in embodiments of this application with reference to accompanying drawings in embodiments of this application.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit an order, a time sequence, priorities, or importance of the plurality of objects.

It should be noted that in this application, terms such as "example" or "for example" are used to represent giving an example, an illustration, or a description. Any embodiment or design scheme described as an "example" or "for example" in this application should not be construed as being more preferred or having more advantages than another embodiment or design scheme. Exactly, use of the terms like "example" or "for example" is intended to present a relative concept in a specific manner.

It should be understood that, in this application, "when", "if", and "on condition that" all mean that an apparatus performs corresponding processing in an objective situation, and are not intended to limit time. The terms do not mean that the apparatus is required to have a determining action during implementation, and do not mean any other limitation.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

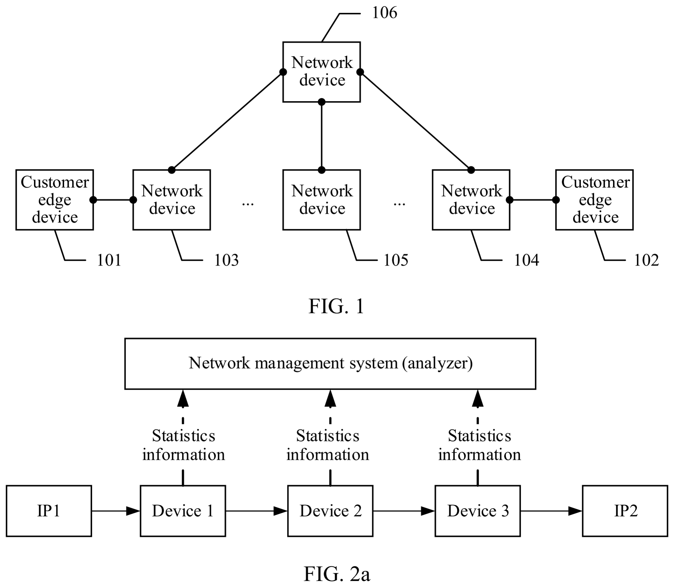

FIG. 1 is a schematic architectural diagram of a communication system according to an embodiment of this application. As shown in FIG. 1, the system includes a plurality of customer edge (customer edge, CE) devices such as a customer edge device 101 and a customer edge device 102, and another possible customer edge device. The system further includes a plurality of network devices such as a network device 103, a network device 104, a network device 105, and a network device 106, and another possible network device.

In FIG. 1, the customer edge device may serve as an ingress device of a packet flow (or referred to as a data flow) transmitted by the communication system. In this case, the customer edge device may be connected to a transmit end of the packet flow, that is, a device indicated by source address information of the packet flow. Correspondingly, the customer edge device may be referred to as a source device, a source node, or the like. Alternatively, the customer edge device may serve as an egress device of a packet flow transmitted by the communication system. In this case, the customer edge device may be connected to a receive end of the packet flow, that is, a device indicated by destination address information of the packet flow. Correspondingly, the customer edge device may be referred to as a destination device, a destination node, or the like. The transmit end of the packet flow or the receive end of the packet flow may be a device that has a data receiving and sending requirement, for example, a terminal device, a server, or a virtual machine.

Optionally, in FIG. 1, the network device may also serve as a source device or a destination device. For example, the network device 103 may serve as a source device, and send, through forwarding by another device, data to the network device 104 serving as a destination device. For another example, the network device 103 may serve as a source device, and send, through forwarding by another device, data to the customer edge device 102 serving as a destination device.

With development of communication networks, network measurement is very important for network management and optimization. For example, network status monitoring, network fault analysis, network security defense, and even network intelligence all depend on the network measurement. FIG. 1 is used as an example. The network device may be a device like a router (router), a switch (switch), a firewall (Firewall), a virtual switch (virtual switch), a virtual router (virtual router), or an intelligent network interface card. These network devices may be configured to: transmit a packet flow from a customer edge device to another customer edge device, and perform network measurement on the packet flow (or one or more packets in the packet flow). Alternatively, these network devices may serve as measurement devices of a packet flow (or one or more packets in the packet flow), and are configured to perform network measurement on a packet flow (or one or more packets in the packet flow) transmitted from a customer edge device to another customer edge device.

It may be understood that a device (for example, a first device or a second device) configured to perform the communication method in this application may be a network device configured to forward a packet flow in FIG. 1. In other words, the network device may measure the packet flow transmitted by the network device.

Currently, the network measurement may be implemented by using a plurality of network measurement technologies such as in-situ flow information telemetry (In-Situ flow information telemetry, IFIT), in-band flow analyzer (In-band flow analyzer, IFA), or in-band network telemetry (In-band network telemetry, INT). In a network transmission process of a packet, communication devices (for example, forwarding devices) on a path of the packet need to record measurement results based on a same network measurement technology, to implement network measurement. In other words, in an implementation process of the network measurement, the communication devices on the path of the packet need to support the same network measurement technology.

It should be noted that implementation of the network measurement technology depends on a header and/or a field of the header carried in the packet. For example, the IFIT may be a network measurement technology. In a packet forwarding process, a packet may indicate, through a carried IFIT header, that network measurement corresponding to the IFIT needs to be performed on the packet. For another example, the IFA may be a network measurement technology. In a packet forwarding process, a packet may indicate, through a carried IFA header, that network measurement corresponding to the IFA needs to be performed on the packet.

Usually, when different packets carry network measurement indications through same headers (and/or fields of the headers), network measurement implemented based on the different packets may be understood as network measurement implemented based on a same network measurement technology. For example, when two different packets both carry IFIT headers, in a forwarding process of the two packets, all forwarding devices may perform network measurement based on the IFIT headers carried in the two packets. In this case, it may be understood that the network measurement is implemented on the two packets by using the IFIT network measurement technology.

Correspondingly, when different packets carry network measurement indications through different headers (and/or fields of the headers), network measurement implemented based on the different packets may be understood as network measurement implemented based on different network measurement technologies. For example, when a packet carries an IFIT header and another packet carries an IFA header, in a process of forwarding the packet, the forwarding device may implement network measurement based on the IFIT header, and in a process of forwarding the another packet, the forwarding device may implement network measurement based on the IFA header. In this case, it may be understood that the network measurement is implemented on the two packets by using different network measurement technologies.

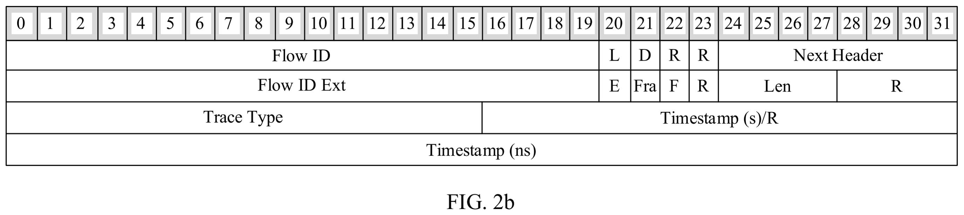

In an implementation example, the following describes an implementation process of an IFIT solution with reference to examples shown in FIG. 2a and FIG. 2b. As shown in FIG. 2a, devices used in the IFIT implementation solution may include network devices (namely, a device 1, a device 2, and a device 3 in FIG. 2a) and a network management system (an analyzer). For example, in FIG. 2a, an internet protocol (internet protocol, IP) address of a packet source device is IP1, and an IP address of a packet destination device is IP2. To be specific, after a data packet sent by IP1 is sequentially forwarded by the device 1, the device 2, and the device 3, IP2 may receive the data packet from IP1. Specifically, the following implementation processes are included.

Step 1: A data packet sent by IP1 to IP2 arrives at the device 1.

Step 2: The device 1 adds an IFIT header to the data packet sent by IP1 (the IFIT header may be encapsulated into different positions based on data packet formats). For example, a format of the IFIT header is shown in FIG. 2b, and includes the following fields:

Flow identifier (Flow ID), "L/D/R/R" indicating bits (bits) of a dye flag, next header (Next Header) indicating an extended data type, flow identifier extension (Flow ID Ext), "E/Fra/F/R" indicating information such as a statistical mode/data flow direction, extension length (denoted as Len), reserved (Reserved, R for short), trace type (Trace Type), timestamp (second) (Timestamp) (S), and timestamp (nanosecond) (Timestamp) (nS).

In FIG. 2a, the IFIT header added by the device 1 to the data packet may be understood as that the device 1 adds path detection information to the data packet, so that another device can subsequently determine, based on the IFIT header, that the path detection information needs to be performed on the data packet.

Optionally, the device 1 uses the L bit and the D bit in the IFIT header to perform packet loss and delay detection. For example, the device 1 periodically reverses the L bit between 0 and 1 to check whether a packet loss occurs in a data packet, and selects one packet in each periodicity and sets the D bit to 1 to perform delay measurement. In other words, the "L" field in the IFIT header added by the device 1 to the data packet may be understood as adding the packet loss detection information to the data packet, so that the another device can subsequently determine, based on the "L" field, that the packet loss detection information needs to be performed on the data packet. The "D" field in the IFIT header added by the device 1 to the data packet may be understood as adding delay detection information to the data packet, so that the another device can subsequently determine, based on the "D" field, that the delay detection information needs to be performed on the data packet.

Step 3: The device 1 collects traffic statistics based on values of the L and D bits in the IFIT header and a packet feature, to collect statistics of information such as a quantity of packets, a quantity of bytes, a timestamp, and an ingress/egress interface, and forwards the data packet to the device 2 based on a local forwarding table.

Step 4: The device 2 collects traffic statistics based on values of the L and D bits in the IFIT header and the packet feature, to collect statistics of information such as a quantity of packets, a quantity of bytes, a timestamp, and an ingress/egress interface, and forwards the data packet to the device 3 based on a local forwarding table.

Step 5: The device 3 collects traffic statistics based on values of the L and D bits in the IFIT header and the packet feature, to collect statistics of information such as a quantity of packets, a quantity of bytes, a timestamp, and an ingress/egress interface, then removes the IFIT header from the data packet, and sends the data packet to IP2.

In an implementation process of step 3 to step 5, after each statistics periodicity ends, the device 1, the device 2, and the device 3 separately report, to the network management system (analyzer), statistics information of the data packet sent from IP1 to IP2. The network management system (analyzer) calculates a forwarding path of the data packet within a network based on the ingress/egress interfaces reported by the devices; calculates, based on the information that is about the quantity of packets and the quantity of bytes and that is reported by the devices, whether a packet loss occurs in the data packet sent from IP1 to IP2; and calculates, based on timestamp information reported by the devices, a forwarding delay of the data packet within the network.

However, in a communication network, different communication devices may support different network measurement technologies. As a result, communication devices on a path of a packet cannot perform network measurement based on a same network measurement technology. Consequently, the network measurement fails. For example, FIG. 2a and FIG. 2b are implemented. When a device that does not support the IFIT technology may exist in the communication network, the IFIT solution cannot be deployed in an end-to-end manner, and a requirement of a user for analyzing information about a packet loss/path/delay of the data packet forwarded within the network in an end-to-end manner cannot be met.

To resolve the foregoing problem, this application provides a communication method and a related device, to indicate, on a transmission path of a packet, different network measurement technologies by using information at different positions of the packet, so that communication devices on the path can implement network measurement based on the different network measurement technologies. The following provides detailed descriptions with reference to the accompanying drawings.

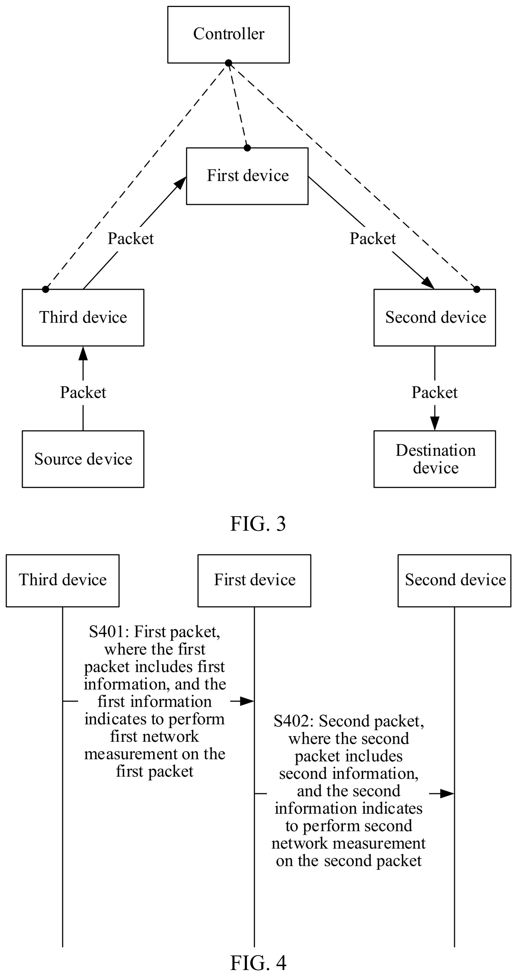

In a scenario example, FIG. 3 is a diagram of a scenario of a communication method according to this application.

In FIG. 3, a source device and a destination device are devices that need to communicate with each other within a network, and may be, for example, personal computers, servers, virtual machines, switches, or routers. In addition, a third device, a first device, and a second device are network devices connected to each other within the network, and may be routers (routers), switches (switches), firewalls (Firewalls), virtual switches (virtual switches), virtual routers (virtual routers), intelligent network interface cards, or the like. A packet sent by the source device 1 to the destination device may arrive at the destination device after being forwarded by the third device, the first device, and the second device.

Optionally, in FIG. 3, the source device may be connected to the destination device via at least two network devices. For example, in the figure, a quantity of the at least two network devices is 3. The quantity of the at least two network devices may be greater than 3. For example, one or more network devices may exist between the source device and the third device in FIG. 3, one or more network devices may exist between the third device and the source device in FIG. 3, one or more network devices may exist between the first device and the second device in FIG. 3, and one or more network devices may exist between the second device and the destination device in FIG. 3. This is not limited herein.

Optionally, in FIG. 3, a controller (or referred to as a network management device, a network management system, network management software, an analyzer, a network analyzer, a network measurement analyzer, a network quality analyzer, or the like) is a software/hardware system that manages network devices within the network, and based on a user setting, delivers a configuration to the network device or analyzes information reported by the device.

FIG. 4 is a diagram of a communication method according to this application. The method includes the following steps.

S401: A first device receives a first packet. The first packet includes first information, and the first information indicates to perform first network measurement on the first packet.

It should be understood that, in step S401, the first packet is from a device on a packet transmission path. The device may be a communication device like a router, a switch, a virtual machine, a virtual switch, or an intelligent network interface card. This is not limited herein. For example, the method shown in FIG. 4 may be applied to the scenario shown in FIG. 3. For example, the third device, the first device, and the second device serve as forwarding devices to forward the packet sent by the source device to the destination device. In this case, the first packet is from the third device on the packet transmission path. As shown in FIG. 3, a source device of the first packet may be a server, a personal computer, a virtual machine, or the like.

Optionally, the source device of the first packet may be the third device, may be a device directly connected to the third device, or may be a device connected to the third device through one or more hops. This is not limited herein.

Optionally, in FIG. 3, one or more forwarding/relay devices may further exist between different devices. For example, the third device may be a device directly connected to the first device, or one or more forwarding/relay devices may exist between the third device and the first device. For another example, the first device may be a device directly connected to the second device, or one or more forwarding/relay devices may exist between the first device and the second device.

S402: The first device sends a second packet. Correspondingly, the second device receives the second packet. The second packet includes second information, the second information indicates to perform second network measurement on the second packet, and a first position of the first information in the first packet is different from a second position of the second information in the second packet.

In this application, information indicating to perform network measurement on a packet may be located in a header of the packet. For example, the first information may be located in a header of the first packet, and the second information may also be located in a header of the second packet. One header may usually include one or more fields. In the first packet, the first information may be carried in the header of the first packet and/or a field in the header of the first packet. Correspondingly, the first position of the first information in the first packet may be understood as a position of the header in the first packet and/or a position of the field in the header of the first packet. Similarly, in the second packet, the second information may be carried in the header of the second packet and/or a field in the header of the second packet. Correspondingly, the second position of the second information in the second packet may be understood as a position of the header in the second packet and/or a position of the field in the header of the second packet.

In other words, that the first position of the first information in the first packet is different from the second position of the second information in the second packet may be understood as that the header used to carry the first information in the first packet is different from the header used to carry the second information in the second packet. And/or, that the first position of the first information in the first packet is different from the second position of the second information in the second packet may be understood as that the header used to carry the first information in the first packet is the same as the header used to carry the second information in the second packet, and the field carrying the first information in the header of the first packet is different from the field carrying the second information in the header of the second packet.

In a possible implementation, the first position of the first information in the first packet in step S401 (or the second position of the second information in the second packet in step S402) is in any one of the following: an internet protocol version 4 (internet protocol version 4, IPv4) header, an internet protocol version 6 (internet protocol version 6, IPv6) header, a virtual extensible local area network (virtual extensible local area network, VXLAN) header, a generic routing encapsulation (generation routing encapsulation, GRE) header, a generic network virtualization encapsulation (generic network virtualization encapsulation, GENEVE) header, an in-band flow analyzer (In-band flow analyzer, IFA) header, an in-band flow analyzer metadata (IFA Metadata) header, an in-situ flow information telemetry (In-Situ flow information telemetry, IFIT) header, an in-situ operation, administration, and maintenance trace option-types (In-Situ operation, administration, and maintenance Trace Option-Types, IOAM Trace Option-Types) header, an in-situ operation, administration, and maintenance direct exporting option-types (In-Situ operation, administration, and maintenance direct exporting Option-Types, IOAM DEX Option-Type) header, an IPv6 extension header, and a GENEVE extension header.

Therefore, the first position of the first information in the first packet or the second position of the second information in the second packet may be implemented by using any one of the foregoing. In other words, the first information or the second information may be located in one of the foregoing plurality of headers, to improve flexibility of solution implementation.

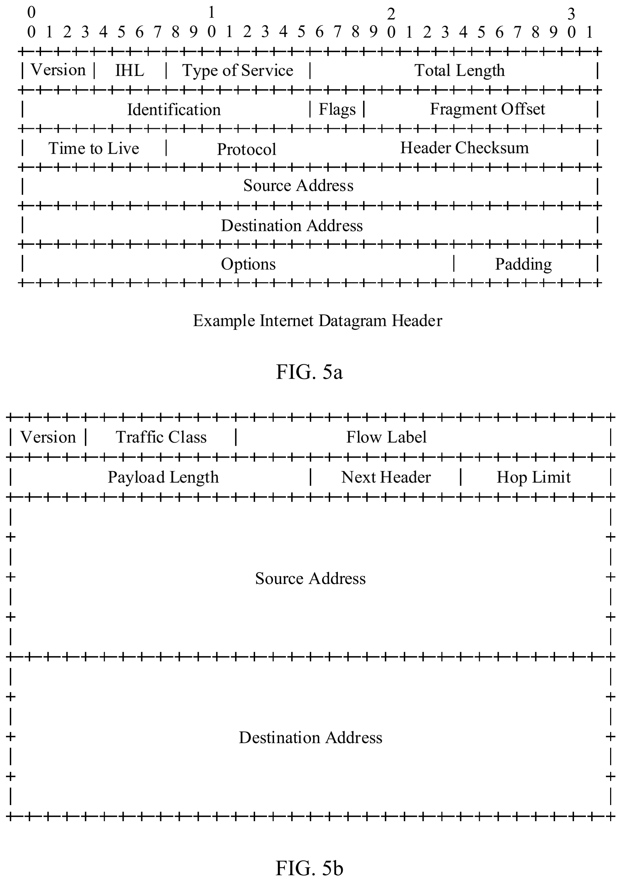

For ease of understanding, the following describes implementations of the first position and the second position with reference to the implementation examples shown in FIG. 5a to FIG. 5l.

In an implementation example, as shown in FIG. 5a, when the first position is in an IPv4 header, the first information is carried in at least one of a differentiated services code point (differentiated services code point, DSCP) field, an explicit congestion notification (explicit congestion notification, ECN) field, or a flags (Flags) field. Similarly, when the second position is in an IPv4 header, the second information is carried in at least one of the DSCP field, the ECN field, or the Flags field.

In another implementation example, as shown in FIG. 5b, when the first position is in an IPv6 header, the first information is carried in a traffic type (Traffic Class) field. Similarly, when the second position is in an IPv6 header, the second information is carried in the Traffic Class field. Similarly,

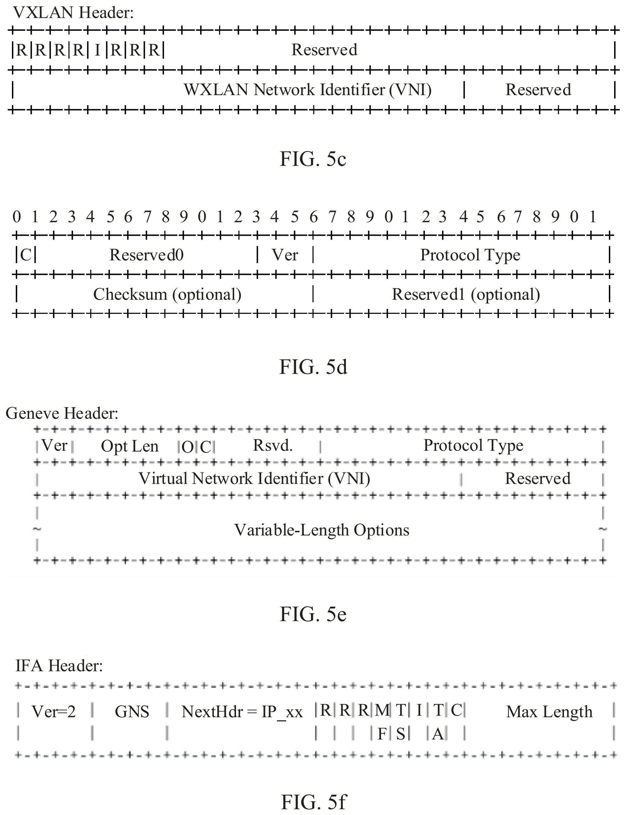

In another implementation example, as shown in FIG. 5c, when the first position is in a VXLAN header, the first information is carried in at least one of an R bit and a reserved (Reserved) field. Similarly, when the second position is in a VXLAN header, the second information is carried in at least one of the R bit and the Reserved field.

In another implementation example, as shown in FIG. 5d, when the first position is in a GRE header, the first information is carried in at least one of a Reserved0 field and a Reserved1 field. Similarly, when the second position is in a GRE header, the second information is carried in at least one of the Reserved0 field and the Reserved1 field.

In another implementation example, as shown in FIG. 5e, when the first position is in a GENEVE header, the first information is carried a Reserved field. Similarly, when the second position is in a GENEVE header, the second information is carried in the Reserved field.

In another implementation example, as shown in FIG. 5f, when the first position is in an IFA header, the first information is carried an R bit. Similarly, when the second position is in an IFA header, the second information is carried in the R bit.

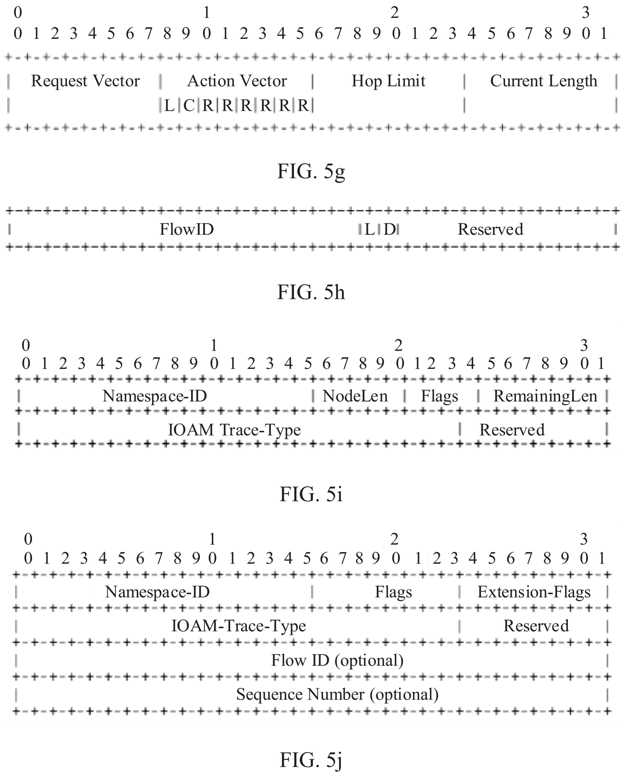

In another implementation example, as shown in FIG. 5g, when the first position is in an IFA Metadata header, the first information is carried in at least one of an L bit, a C bit, and an R bit. Similarly, when the second position is in an IFA Metadata header, the second information is carried in at least one of the L bit, the C bit, and the R bit.

In another implementation example, as shown in FIG. 5h, when the first position is in an IFIT header, the first information is carried in at least one of an L bit, a D bit, and a Reserved field. Similarly, when the second position is in an IFIT header, the second information is carried in at least one of the L bit, the D bit, and the Reserved field.

In another implementation example, as shown in FIG. 5i, when the first position is in an IOAM Trace Option-Types header, the first information is carried in at least one of a Flags field and a Reserved field. Similarly, when the second position is in an IOAM Trace Option-Types header, the second information is carried in at least one of the Flags field and the Reserved field.

In another implementation example, as shown in FIG. 5j, when the first position is in an IOAM DEX Option-Type header, the first information is carried in at least one of a Flags field and a Reserved field. Similarly, when the second position is in an IOAM DEX Option-Type header, the second information is carried in at least one of the Flags field and the Reserved field.

Optionally, in addition to the IOAM Trace Option-Types header and the IOAM DEX Option-Type header shown in FIG. 5i and FIG. 5j, the first position (or the second position) may alternatively be in the IOAM MetaData header. For example, the first information (or the second information) is carried in a field like an ingress port number (Ingress Port ID), an egress port number (Egress Port ID), an ingress timestamp (In TimeStamp), and a forwarding delay (Forwarding Delay) in the IOAM MetaData header.

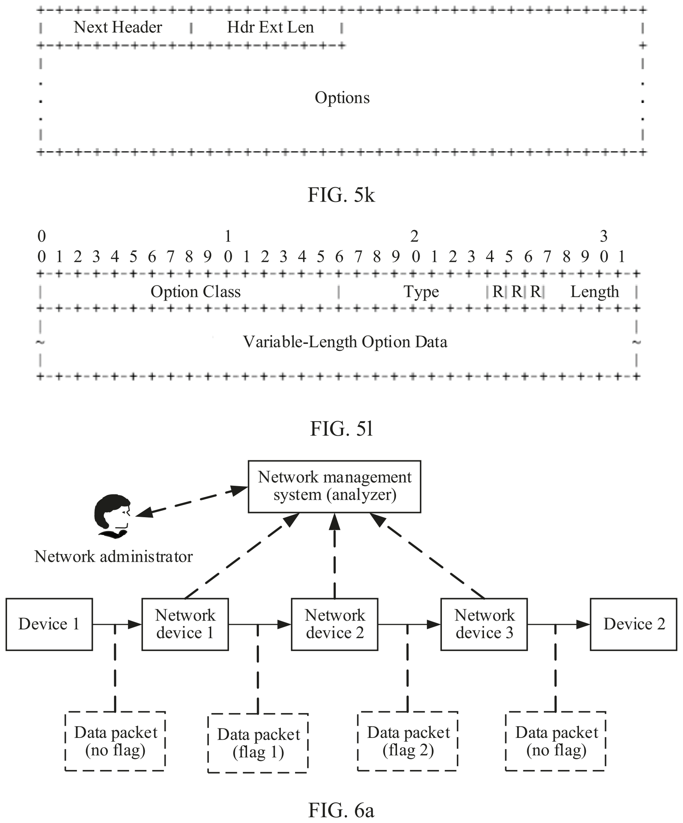

In another implementation example, as shown in FIG. 5k, when the first position is in an IPv6 extension header, the first information is carried in an options (Options) field. Similarly, when the second position is in an IPv6 extension header, the second information is carried in the Options field.

In another implementation example, as shown in FIG. 5l, when the first position is in a GENEVE extension header, the first information is carried in an option data (Option Data) field. Similarly, when the second position is in a GENEVE extension header, the second information is carried in the Option Data field.

It should be understood that, in a frame format shown in FIG. 5a or FIG. 5l, values of quantities of bytes (or quantities of bits) of different fields and an order of the different fields are not limited in this application. The values of quantities of bytes (or quantities of bits) of the different fields in the frame format shown in FIG. 5a or FIG. 5l and the order of the different fields are merely an implementation example. The values of quantities of bytes (or quantities of bits) of the different fields in the frame format shown in FIG. 5a or FIG. 5l may alternatively be other values, and the order of the different fields in the frame format shown in FIG. 5a or FIG. 5l may alternatively be another field order. This is not limited herein. In addition, the different fields in the frame format shown in FIG. 5a or FIG. 5l may be independently implemented.

According to the foregoing technical solution, the first position of the first information in the first packet or the second position of the second information in the second packet may be in one of a plurality of different headers. The first information or the second information may be carried in a corresponding field in the header, to provide specific implementations of the first information and the second information.

It should be noted that, that the first information/the second information is carried in a field may be understood as that when a value of the field is a predefined value/a preconfigured value, a meaning of the field is the first information/the second information. In other words, in a packet forwarding process, after receiving a packet carrying the field, a packet forwarding device (for example, the first device or the second device) may determine, based on a value of the field, whether the packet carries a network measurement indication. For example, the first device may determine, based on the value of the field, whether the received first packet carries the first information, and the second device may determine, based on the value of the field, whether the received first packet carries the second information. An implementation process of the IFIT header in FIG. 5h is used as an example. When a value of the "L" bit is "1", it indicates that the first network measurement indicated by the first information includes packet loss detection (or indicates that the second network measurement indicated by the second information includes packet loss detection). When a value of the "D bit" is "1", it indicates that the first network measurement indicated by the first information includes delay detection (or indicates that the second network measurement indicated by the second information includes delay detection).

It should be understood that, in step S402, a process in which the first device sends the second packet based on the first packet may be understood as follows: On a transmission path of the first packet, the first device serves as a forwarding device (a forwarding node, a routing forwarding device, or the like) on the transmission path. When the first device receives the first packet and determines that the first packet needs to be forwarded, the first device modifies the first packet to the second packet, and sends the second packet to a next-hop node (for example, the second device mentioned below). In other words, a payload (payload) of the first packet may be the same as a payload of the second packet.

Optionally, in a process in which the first device modifies the first packet to the second packet, the first device may add the second information based on the first information in the first packet to obtain the second packet, or the first device may map the first information in the first packet to the second information to obtain the second packet. The first device may delete the first information from the second packet, or may retain the first information. This is not limited herein.

In a possible implementation, in the process in which the first device modifies the first packet to obtain the second packet, the first device may modify a value of an existing field in the first packet to obtain the second packet. That is, the second information is carried in the existing field in the first packet. This modification manner may be referred to as a data packet modification manner. To be specific, no new field needs to be added when the network measurement is performed, and a part of existing bits in the packet are used as a packet flag. For example, the second information may be implemented in any one of the foregoing manners in FIG. 5a to FIG. 5e.

In another possible implementation, in the process in which the first device modifies the first packet to obtain the second packet, the first device may obtain the second packet by adding a new field (or a new header) other than an existing field included in the first packet. That is, the second information is carried in the new field (or new header) other than the existing field included in the first packet. This modification manner may be referred to as a detection field addition manner. To be specific, the new field (or new header) is added when the network measurement is performed, and the new field (or a field in the new header) is used as a packet flag. For example, the second information may be implemented in any one of the foregoing manners in FIG. 5f to FIG. 5l.

In a possible implementation, the first information carried in the first packet in step S401 or the second information carried in the second packet in step S402 includes at least one of the following: delay detection information, path detection information, and packet loss detection information. Therefore, the network measurement may include one or more of delay detection, path detection, and packet loss detection, to provide a plurality of network measurement manners.

Optionally, the path detection information is carried in one field (for example, a field in a header) or carried in one header.

Optionally, the delay detection information and the packet loss detection information may be carried in different fields. For example, when the first information or the second information includes the delay detection information, the path detection information, and the packet loss detection information, the three pieces of information may be carried in a same header, that is, the three pieces of information are respectively carried in three different fields in the same header.

It should be noted that the first network measurement may be completely or partially the same as the second network measurement.

For example, when the first network measurement indicated by the first information includes the delay detection, the path detection, and the packet loss detection corresponding to the three pieces of information: the delay detection information, the path detection information, and the packet loss detection information, if the first device determines that the first device and/or a next-hop device (for example, the second device) support/supports implementation of the delay detection, the path detection, and the packet loss detection based on a second network side, the second network measurement indicated by the second information in the second packet sent by the first device also includes the delay detection, the path detection, and the packet loss detection.

For another example, when the first network measurement indicated by the first information includes the delay detection, the path detection, and the packet loss detection corresponding to the three pieces of information: the delay detection information, the path detection information, and the packet loss detection information, if the first device determines that the first device and/or a next-hop device (for example, the second device) support/supports a part of the detection but does not support the other part of the detection (for example, support/supports the delay detection but do/does not support the path detection and the packet loss detection) based on a second network side, the second network measurement indicated by the second information in the second packet sent by the first device also includes the delay detection but does not include the path detection and the packet loss detection.

For another example, when the first network measurement indicated by the first information includes the delay detection corresponding to the delay detection information, if the first device determines that the first device and/or a next-hop device (for example, the second device) support/supports the three types of network measurement: the delay detection, the path detection, and the packet loss detection, based on a second network side, the second network measurement indicated by the second information in the second packet sent by the first device may include the three types of network measurement: the delay detection, the path detection, and the packet loss detection.

For example, the delay detection information, the path detection information, and the packet loss detection information may be carried in fields in any one of the foregoing manners in FIG. 5a to FIG. 5l.

FIG. 5a is used as an example. The delay detection information, the path detection information, and the packet loss detection information may be respectively carried in the DSCP field, the ECN field, and the Flags field in the IPv4 packet.

FIG. 5b is used as another example. The delay detection information, the path detection information, and the packet loss detection information may be respectively carried in different bits in the Traffic Class field of the IPv6 packet.

FIG. 5f is used as another example. The path detection information may be carried in the IFIT Header (to be specific, when determining that the packet carries the IFIT Header, a receive end of the packet determines that the path detection needs to be performed on the packet), and the delay detection information and the packet loss detection information may be respectively carried in the D bit and the L bit in the IFIT Header.

It should be noted that, when the first information or the second information includes different information content, the first information or the second information may perform network measurement on a packet in a plurality of manners.

In an implementation example, the first information is used as an example. When the first information includes the delay detection information and/or the packet loss detection information, that the first information indicates to perform the first network measurement on the first packet may be understood as that the delay detection information and/or the packet loss detection information in the first information indicate/indicates to perform network measurement for delay detection and/or network measurement for packet loss detection on the first packet.

In another implementation example, the first information is still used as an example. When the first information includes the path detection information, that the first information indicates to perform the first network measurement on the first packet may be understood as that the path detection information in the first information indicates to perform network measurement for path detection on a packet flow (or a data flow) of the first packet.

Optionally, the path detection information may be referred to as an in-situ flow detection flag. The in-situ flow detection flag is used to identify that in-situ flow detection needs to be performed on the packet, to implement the path detection.

Similarly, the packet loss detection information may carry a packet loss detection flag. The packet loss detection flag is used to detect statistics information of lost packets of data packets, and a length of the packet loss detection flag may be 1 bit. For example, for one detection task, data packet flags in a same periodicity are consistent, and flags in adjacent detection periodicities are reversed between 0 and 1. For example, if a packet loss detection flag in an n^{th} periodicity is 0, a packet loss detection flag in an (n+1)^{th} periodicity is 1, and a packet loss detection flag in an (n+2)^{th} periodicity is 0.

Similarly, the delay detection information may carry a delay detection flag. The delay detection flag is used to detect statistics information of delays of data packets, and a length of the delay detection flag may be 1 bit. One or more data packets are selected for marking in each periodicity, and devices along a path report timestamps for receiving/sending packets whose delay detection flags are set to 1.

It should be noted that the packet loss detection flag and the delay detection flag may be used independently. For example, only the packet loss detection flag is used when a packet loss detection function is needed, and only the delay detection flag is used when a delay detection function is needed. Alternatively, both the packet loss detection flag and the delay detection flag are used based on a usage scenario, to support both the packet loss detection function and the delay detection function. In addition, as shown above, the three pieces of information: the delay detection information, the path detection information, and the packet loss detection information, may be carried in the first packet or the second packet by modifying a packet, or may be carried in the first packet or the second packet by adding a detection field.

In a possible implementation, the second packet sent by the first packet in step S402 further includes the first information, and the first information is at a first position in the second packet. Specifically, in addition to the second information, the second packet sent by the first device may further include the first information indicating to perform the first network measurement on the second packet, so that a receiver of the second packet can perform the network measurement based on the first information and/or the second information.

In addition, for the receiver of the second packet, when the second packet includes the first information and the second information, the receiver can perform, based on a network configuration preference, a capability preference, or the like, at least one of network measurement processes corresponding to the first information and the second information. Compared with an implementation in which communication devices (for example, forwarding devices) on a path of a packet perform network measurement based only on a same network measurement technology, flexibility of network measurement implementation can be improved.

It should be understood that, when the first packet and the second packet each include the first information, the position of the first information in the first packet may be the same as the position of the second information in the second packet. Correspondingly, the header used to carry the first information in the first packet may be the same as the header used to carry the first information in the second packet. Alternatively, the header used to carry the first information in the first packet may be the same as the header used to carry the first information in the second packet, and the field carrying the first information in the header of the first packet is the same as the field carrying the first information in the header of the second packet.

Optionally, the second packet sent by the first packet in step S402 may alternatively not include the first information, so that the receiver of the second packet can perform the network measurement based on the second information carried in the second packet.

Optionally, a case in which the second packet does not include the first information may be referred to as single-layer packet flag mapping, and a case in which the second packet includes the first information may be referred to as double-layer flag mapping. The single-layer flag mapping may mean that the network device removes an original packet flag when performing packet flag mapping, and retains a mapped packet flag. That is, a packet carries one layer of new flag after the network device performs the packet flag mapping. For example, in an implementation process shown in FIG. 4, the second packet sent by the first device carries the second information but does not carry the first information. The double-layer flag mapping may mean that the network device retains an original packet flag when performing packet flag mapping, and adds a new flag to the packet. That is, a packet carries two layers of flags after the network device performs the packet flag mapping. For example, in an implementation process shown in FIG. 4, the second packet sent by the first device carries the second information and the first information.

In a possible implementation, the method shown in FIG. 4 further includes: The first device receives third information. The third information indicates that the next-hop node has a capability of performing the second network measurement based on the second information and/or the third information indicates that the next-hop node does not have a capability of performing the first network measurement based on the first information. The third information is from the next-hop node or a controller. Specifically, the first device may further receive the third information, and determine a capability of the next-hop node based on the third information. Correspondingly, when the first device determines that the next-hop node has the capability of performing the second network measurement based on the second information and/or the next-hop node does not have the capability of performing the first network measurement based on the first information, after receiving the first packet, the first device may modify the first packet carrying the first information to the second packet carrying the second information, so that the next-hop node can perform the network measurement based on the second information, to avoid a measurement failure.

In a possible implementation, the first packet received by the first device in step S401 further includes a first measurement result, and the first measurement result includes a measurement result obtained based on the first information. Correspondingly, the second packet sent by the first device in step S402 further includes a second measurement result, and the second measurement result is obtained by processing the first measurement result.

Specifically, after a communication device on a packet transmission path performs network measurement to obtain a measurement result, a packet forwarded by the communication device may include the measurement result. In other words, the first packet received by the first device may include the measurement result obtained based on the first information. Correspondingly, the second packet sent by the first device based on the first packet may include the second measurement result obtained by processing the first measurement result. In other words, when a network measurement technology indicated by the first information in the first packet is modified to another network measurement technology indicated by the second information in the second packet, a measurement result carried in the second packet may indicate (or include) the first measurement result, to avoid a loss of the measurement result and improve network measurement performance.

In an implementation example, the following uses an example in which the first measurement result in the first packet is carried in the IFA MetaData header (to be specific, the first information is carried in one or more bits in the IFA Metadata header) in FIG. 5g, and the second measurement result in the second packet is carried in the IOAM MetaData header (to be specific, the first information is carried in one or more bits in the IOAM MetaData header).

Table 1 shows fields included in the IFA MetaData header and descriptions of the fields.

**Table 1**

| Field | Length | Description |
|---|---|---|
| Device ID | 32 bits | Node ID |
| Template ID | 3 bits | Packet format identifier |
| Congestion | 5 bits | This field indicates a packet congestion identifier, and is not supported currently. |
| Egress Port Drop Pkt Byte Cnt Upper | 8 bits | It is used together with "Egress Port Drop Pkt Byte Cnt" to indicate a count of dropped packets for the egress port. This field is not supported currently. |
| IP_TTL | 8 bits | TTL value of the packet |
| Queue_id | 8 bits | Queue ID |
| Rx Timestamp Seconds Upper | 32 bits | Timestamp for receiving the packet, in seconds |
| Rx Timestamp Seconds | 16 bits | |
| Rx Timestamp Nano-Seconds Upper | 16 bits | Timestamp for receiving the packet, in nanoseconds |
| Rx Timestamp Nano-Seconds | 16 bits | |
| Tx Timestamp Nano-Seconds Upper | 16 bits | Timestamp for sending the packet, in nanoseconds |
| Tx Timestamp Nano-Seconds | 16 bits | |
| Egress Port Utilization [%] | 16 bits | Egress port bandwidth utilization |
| Ingress Port [module, port] | 16 bits | Packet ingress port, including a chip number and a port number |
| Egress Port [module, port] | 16 bits | Packet egress port, including a chip number and a port number |
| Egress Port Drop Pkt Byte Cnt | 32 bits | It is used together with "Egress Port Drop Pkt Byte Cnt Upper" to indicate the count of dropped packets for the egress port. This field is not supported currently. |

Table 2 shows fields included in the IOAM MetaData header and descriptions of the fields.

**Table 2**

| Field | Length | Description |
|---|---|---|
| HopLimit | 8 bits | Hop limit |
| Device ID | 24 bits | Device node number |
| Ingress Port ID | 16 bits | Ingress port number |
| Egress Port ID | 16 bits | Egress port number |
| In Timestamp | 64 bits | Timestamp for entering the device |
| Forwarding Delay | 32 bits | Forwarding delay |
| Queue Depth | 32 bits | Queue depth |
| Buffer | 32 bits | Buffer |
| Checksum Complement | 32 bits | Checksum of the complement of the packet after the IOAM header is added |

Usually, in a packet forwarding process, if a packet received by a device includes an IFA MetaData header, and the device supports network measurement based on the IFA MetaData header, the device adds an IFA MetaData header to the received packet, to carry a local measurement result by using the added IFA MetaData header. In other words, a packet forwarded by the device to a next-hop node carries one or more IFA MetaData headers existing in the original received packet and the IFA MetaData header added by the device. Similarly, in a packet forwarding process, if a packet received by a device includes an IOAM MetaData header, and the device supports network measurement based on the IOAM MetaData header, the device adds an IOAM MetaData header to the received packet, to carry a local measurement result by using the added IOAM MetaData header. In other words, a packet forwarded by the device to a next-hop node carries one or more IOAM MetaData headers existing in the original received packet and the IOAM MetaData header added by the device.

In the foregoing technical solution, the first packet received by the first device includes the IFA MetaData header, but the first device maps a measurement result in the IFA MetaData header to the IOAM MetaData header, so that the next-hop node (namely, the second device) can perform the network measurement based on the IOAM MetaData header, to avoid a measurement failure caused because the second device cannot support the IFA MetaData header. Correspondingly, the first device may map the measurement result in the IFA MetaData header carried in the first packet to a measurement result in the IOAM MetaData header carried in the second packet. In other words, the first device maps the one or more IFA MetaData headers carried in the first packet to the one or more corresponding IOAM MetaData headers, and the first device adds the additional IOAM MetaData header to carry the local measurement result of the first device. In an implementation example, a processing process of the mapping is shown in Table 3.

**Table 3**

| IFA Metadata field | IOAM Metadata field | Description |
|---|---|---|
| IP_TTL | HopLimit | Hop limit |
| Device ID | Device ID | Device node number |
| Ingress Port [module, port] | Ingress Port ID | Ingress port number |
| Egress Port [module, port] | Egress Port ID | Egress port number |
| Rx Timestamp | In TimeStamp | Timestamp for entering the device |
| Tx Timestamp | Forwarding Delay | Forwarding delay |
| Rx Timestamp | | |

Optionally, the first device may perform the network measurement based on the first information and/or the second information, to obtain a third measurement result. In the process in which the first device modifies the first packet to the second packet, the first device may process (or map) the third measurement result and the first measurement result obtained based on the network measurement technology indicated by the first information to the second measurement result obtained based on the another network measurement technology indicated by the second information. For example, the second measurement result may include original measurement data of the third measurement result and original measurement data of the first measurement result. For another example, the second measurement result may include a combined measurement result obtained by combining the third measurement result and the first measurement result.

In a possible implementation, the method shown in FIG. 4 further includes: The first device sends the third measurement result to the controller. The third measurement result is obtained based on the first information and/or the second information.

Specifically, after the communication device on the packet transmission path performs the network measurement to obtain the measurement result, the communication device may send the measurement result to the controller, so that the controller performs, based on measurement results from a plurality of communication devices, network analysis corresponding to the network measurement. Therefore, after the first device performs the network measurement based on the first information and/or the second information to obtain the third measurement result, the first device may send the third measurement result to the controller, so that the controller can subsequently perform network analysis corresponding to the network measurement.

Optionally, the controller is configured to: receive the measurement results measured by the plurality of network devices, and perform the network analysis. The controller may be a device like a server or a virtual machine. The controller may have another name, for example, a network management device, an analyzer, a network analyzer, a network measurement analyzer, or a network quality analyzer.

Optionally, for the first device, the first device may send the third measurement result to the controller, and/or the second packet sent by the first device based on the first packet may include the second measurement result obtained by processing the first measurement result. In other words, the first device may send the measurement result to the controller, so that the controller may analyze the measurement result based on summarized information; and/or the first device may send a packet carrying the local measurement result to the next-hop node, so that an egress node of the packet can analyze the measurement result based on information carried in the packet (or after the egress node of the packet sends the packet to the controller, the controller can analyze the measurement result based on the information carried in the packet).

According to the technical solution shown in FIG. 4, the first packet received by the first device in step S401 includes the first information indicating to perform the first network measurement on the first packet. Then, the second packet sent by the first device based on the first packet in step S402 includes the second information indicating to perform the second network measurement on the second packet. The first position of the first information in the first packet is different from the second position of the second information in the second packet. In addition, different network measurement technologies are usually indicated by information (for example, fields/headers) at different positions in a packet. In other words, in the packet transmission process, for the first device and/or previous N (N is a positive integer) devices of the first device, a device supporting the first network measurement may perform, based on the first information at the first position in the packet, network measurement corresponding to a network measurement technology. In addition, for the first device and/or next M (M is a positive integer) devices of the first device, a device supporting second network measurement may perform, based on the second information at the second position in the packet, network measurement corresponding to another network measurement technology. Therefore, compared with the implementation in which the communication devices (for example, the forwarding devices) on the path of the packet perform the network measurement based only on the same network measurement technology, in the foregoing technical solution, on the packet transmission path, different network measurement technologies are indicated by information at different positions of the packet, so that the communication devices on the path can implement network measurement based on the different network measurement technologies.

For ease of understanding, the following describes the communication method shown in FIG. 4 by using an example with reference to a scenario shown in FIG. 6a.

As shown in FIG. 6a, a data packet sent by a device 1 serving as a source device to a device 2 serving as a destination device arrives at the device 2 after being sequentially forwarded by a network device 1, a network device 2, and a network device 3. When forwarding the data packet, the network device marks the data packet and collects, based on the flag, statistics of information such as ingress/egress interfaces of the data packet and a quantity of packets. A network management system (an analyzer) collects traffic statistics result generated on the network device, and analyze information such as a forwarding path, a packet loss rate, and a forwarding delay of the data packet within a network.

It may be understood that, in the process shown in FIG. 4, after the communication device on the packet transmission path performs the network measurement to obtain the measurement result, the packet forwarded by the communication device may include the measurement result; or after the communication device on the packet transmission path performs the network measurement to obtain the measurement result, the communication device may send the measurement result to the controller, so that the controller performs the network analysis corresponding to the network measurement based on the measurement results from the plurality of communication devices. If the measurement result of the network measurement is implemented by using the former, the network management system (analyzer) may not be included in FIG. 6a; and if the measurement result of the network measurement is implemented by using the latter, the network management system (analyzer) may be included in FIG. 6a, and the network management system (analyzer) analyzes the network measurement result. For example, in FIG. 6a, the network management system (analyzer) analyzes the network measurement result.

It should be noted that the network device 1 in FIG. 6a may be the third device in FIG. 4, the network device 2 in FIG. 6a may be the first device in FIG. 4, and the network device 3 in FIG. 6a may be the second device in FIG. 4. An implementation process of each role in FIG. 6a is as follows.

Network administrator: The network administrator needs to perform network measurement between the device 1 and the device 2 during service exception or routine operation and maintenance. The network administrator may deploy, on the network device 1 by using the network management system (analyzer) or another device configuration tool, configuration information of a data packet that needs to be detected.

Device 1: The device 1 needs to send a data packet (for example, an IPv4 packet or an IPv6 packet) to the device 2, and the device 1 sends the packet to the network device 1 based on a local forwarding entry.

Network device 1: After receiving the packet sent by the device 1, the network device 1 identifies, based on a header and a device configuration, that network quality measurement needs to be performed, adds a flag 1 to the data packet, and measures, based on the flag 1, statistics information (such as an ingress/egress interface, a quantity of packets, a quantity of bytes, and a timestamp) of forwarding of the data packet on the network device 1. Then, the network device 1 forwards, based on a forwarding entry, a data packet carrying the flag 1 to the network device 2.

Network device 2: After receiving the data packet, the network device 2 identifies, based on the flag 1 carried in the data packet, that network quality measurement needs to be performed (records statistics information of forwarding of the data packet on the network device 2, for example, an ingress/egress interface, a quantity of packets, a quantity of bytes, and a timestamp). In addition, the network device 2 maps the flag 1 in the packet to a flag 2 according to a flag mapping method, and forwards a packet carrying the flag 2 to the network device 3 based on a forwarding entry.

It should be understood that a process in which the network device 2 receives the data packet carrying the flag 1 from the network device 1 is an example of the implementation in which the first device receives the first packet from the third device in FIG. 4. In addition, a process in which the network device 2 sends the data packet carrying the flag 2 to the network device 3 is denoted as an example of the implementation in which the first device sends the second packet to the second device in FIG. 4.

Optionally, the network device 2 may map the flag 1 to the flag 2 based on a configuration. In an implementation example, the network administrator delivers a packet flag mapping configuration to the network device 2 by using a command line and the network management system (analyzer). Configuration content mainly includes a source flag mapping method (flag 1), a destination flag mapping method (flag 2), and a flag type (path detection information, packet loss detection information, and delay detection information) that needs to be mapped. The network administrator may select, based on a scenario and a device capability, the network device 2 to map one or more flag types when forwarding a packet. For example, if a user has a plurality of detection purposes at the same time, and the network device 2 and a subsequent device supports the plurality of detection purposes, a plurality of flag types (the flag types herein refer to a path detection flag, a packet loss detection flag, and a delay detection flag) may be selected, for example, the three types of flags are carried at the same time. For another example, if a user needs only path detection and packet loss detection functions (or the network device 2 and a subsequent device do not support a delay detection function), the network device 2 may map only a path detection flag and a packet loss detection flag.

It should be understood that, in the implementation example shown in FIG. 6a, the flag 1 is an implementation example of the foregoing first information, and the flag 2 is an implementation example of the foregoing second information. That is, the flag 1 and the flag 2 may be carried in different fields in any two of the accompanying drawings shown in FIG. 5a to FIG. 5l.

In an implementation example, in a process of performing packet flag mapping by the network device 2, after receiving the packet carrying the flag 1, the network device 2 forwards the packet based on the forwarding entry, and maps one or more pieces of packet information (path detection information, packet loss detection information, and delay detection information) in the flag 1 to information in the flag 2 based on the packet flag mapping configuration.

For example, when the flag 1 carries the path detection information, when forwarding the packet, the network device 2 may determine, based on a configuration of the network administrator/network management system (analyzer), a marking manner used in the flag mapping. As shown above, the flag 1 may be the first information described above. The first information may be carried in the packet by modifying the packet, or may be carried in the packet by adding a detection field. For example, the mapping process may be implemented based on Table 4.

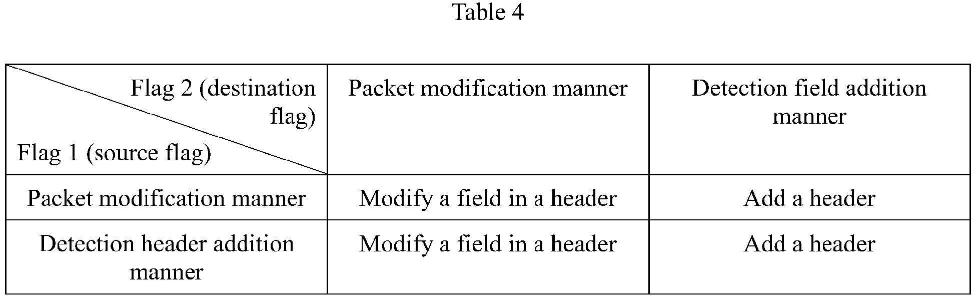

For another example, when the flag 1 carries the packet loss detection information, a flag length of the packet loss detection information may be 1 bit, and the bit is periodically reversed between 0 and 1. The network device 2 determines, based on the packet flag mapping configuration, whether to map a packet loss detection flag in the flag 1 (source flag) carried in the packet to a packet loss detection flag in the flag 2 (destination flag). If the packet loss detection flag needs to be mapped, a method for mapping the packet loss detection flag by the network device 2 is shown in Table 5.

**Table 5**

| Packet loss detection information in the flag 1 | Packet loss detection information in the flag 2 |
|---|---|
| 0 | 0 |
| 1 | 1 |

For another example, when the flag 1 carries the delay detection information, a flag length of the delay detection information may be 1 bit. The network device 2 determines, based on the packet flag mapping configuration, whether to map a delay detection flag in the flag 1 carried in the packet to a delay detection flag in the flag 2 (destination flag). If the delay flag needs to be mapped, a method for mapping the delay detection flag by the network device 2 is shown in Table 6.

**Table 6**

| Delay detection information in the flag 1 | Delay detection information in the flag 2 |
|---|---|
| 0 | 0 |
| 1 | 1 |

Network device 3: After receiving the data packet, the network device 3 identifies, based on the flag 2 carried in the data packet, that network quality measurement needs to be performed, measures, based on the flag 2, statistics information (such as an ingress/egress interface, a quantity of packets, a quantity of bytes, and a timestamp) of forwarding of the data packet on the network device 3, removes all flags carried in the data packet, and forwards a data packet to the device 2 based on a forwarding entry.

Device 2: The device 2 receives, from the network device 3, the data packet carrying no flag.

Network management system (analyzer): The gateway system (analyzer) collects, based on an agreed network quality measurement periodicity, traffic statistics information recorded on the network device 1, the network device 2, and the network device 3, and analyzes, based on the traffic statistics information, statistics information of a forwarding path, a packet loss rate, and a delay of the data packet sent by the device 1 to the device 2 within the network.

In an implementation example, the flag 1 may be carried in the IFIT Header in FIG. 5f, and the flag 2 may be carried in the IPv4 header in FIG. 5a. In the scenario shown in FIG. 6a, if the network device 1 sends, based on the example shown in FIG. 2a, a packet carrying an IFIT Header to the network device 2, the network device 2 may discard the packet or transparently transmit the packet because the network device 2 does not support an IFIT technology. Consequently, network measurement cannot be performed on the packet between the network device 1 and the network device 2. However, in an implementation process shown in FIG. 6a, the network device 1 may map the flag 1 to the flag 2 that can be identified by the network device 2 (or the network device 2 has a capability of performing network measurement based on the flag 2), so that the network device 2 can perform the corresponding network measurement based on the flag 2, and the network measurement can be performed on the packet between the network device 1 and the network device 2.

As shown in FIG. 4, the second packet sent by the first device in step S402 may not carry the first information (namely, single-layer flag mapping), or may carry the first information (namely, double-layer flag mapping). Similarly, in the implementation process shown in FIG. 6a, the network device 2 is used as an implementation example of the first device, and the network device 2 may perform the flag mapping in the following two manners.

Manner 1: As shown in FIG. 6a, the network device 2 removes the flag 1 carried in the data packet, and adds the flag 2 to the data packet, namely, single-layer flag mapping.

In Manner 1, the network device 1 sends the data packet carrying the flag (flag 1). There may be n (n≥0) network devices that support the packet flag 1 between the network device 1 and the network device 2, and these network devices may perform network measurement based on the flag 1. In addition, the data packet received by the network device 2 carries the flag 1. The network device 2 performs the packet flag mapping while forwarding the packet, and sends, to the network device 3, the data packet that carries only one layer of flag (flag 2). There may be n (n≥0) network devices that support the flag 2 between the network device 2 and the network device 3, and these network devices may perform network measurement by using the packet flag 2. Then, the network device 3 receives the packet carrying the packet flag (flag 2), removes the packet flag, and forwards the packet to the device 2 (namely, the destination device).

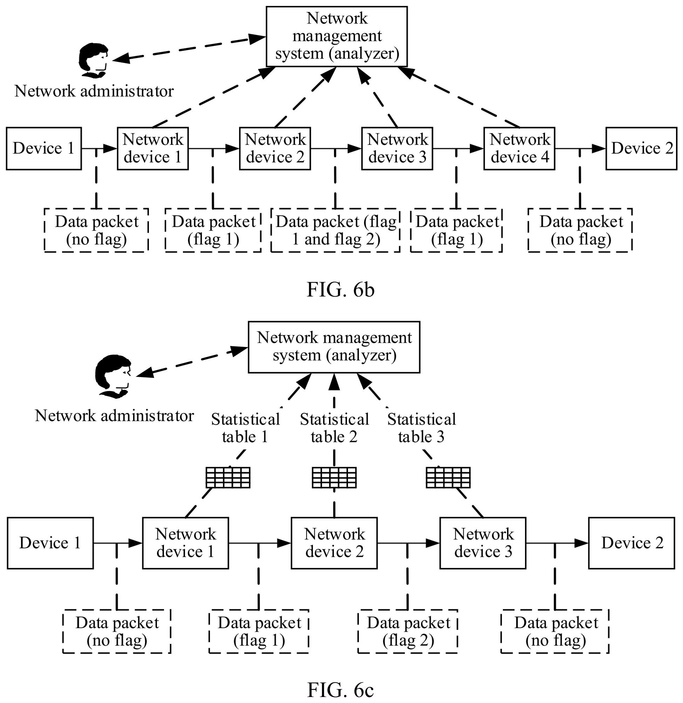

Manner 2: As shown in FIG. 6b, the network device 2 retains the flag 1 carried in the data packet, and adds the flag 2 to the data packet, namely, double-layer flag mapping. For behavior of each role in FIG. 6b, refer to the foregoing descriptions in FIG. 6a.

In Manner 2, the network device 1 sends the data packet carrying the flag (flag 1). There may be n (n≥0) network devices that support the packet flag 1 between the network device 1 and the network device 2, and these network devices may perform network measurement based on the flag 1. In addition, the data packet received by the network device 2 carries the flag 1. After the network device 2 performs forwarding and flag mapping, the packet carries both the flag 1 and the flag 2. There may be n (n≥0) network devices that support the flag 2 between the network device 2 and the network device 3, and these devices may perform network measurement by using the flag 1 and/or the flag 2.

In the example shown in FIG. 6b, the network device 3 may be a last device that supports the flag 2. After the network device 3 receives the packet that carries both two layers of flags (flag 1 and flag 2), the network device 3 removes the flag 2 from the packet when forwarding the packet, and forwards the packet that carries only the flag 1 to a next-hop device. There may be n (n≥0) network devices that support the flag 2 between the network device 3 and a network device 4, and these devices may perform network measurement by using the packet flag 1. Then, the network device 4 may be a last-hop device that supports the flag 1, and receives the packet that carries only one layer of flag (flag 1). The network device 4 performs network quality measurement based on the flag 1 in the packet, removes the packet flag, and forwards the packet to the device 2 (namely, the destination device).

Optionally, in an implementation process shown in FIG. 6b, the network device 1 and the network device 2 may be a same device, that is, add both the flag 1 and the flag 2.

Optionally, in the implementation process shown in FIG. 6b, the network device 3 and the network device 4 may be a same device, that is, remove both the flag 1 and the flag 2.

**In** the implementation process shown in FIG. 6a, the flag 1 is an implementation example of the foregoing first information, and the flag 2 is an implementation example of the foregoing second information. Correspondingly, the first information or the second information (namely, the flag 1 or the flag 2) may include at least one of path measurement information, the packet loss detection information, and the delay detection information. The following describes, with reference to the scenario shown in FIG. 6a, the network measurement implemented based on the flag 1 or the flag 2.

As shown in FIG. 6c, in the implementation process shown in FIG. 6a, network devices such as the network device 1, the network device 2, and the network device 3 may send measurement results to the network management system (analyzer), and the measurement results may be carried in a form of a statistical table in FIG. 6c. To be specific, the measurement result obtained by the network device 1 by performing the network measurement based on the flag 1 may be carried in a statistical table 1, the measurement result obtained by the network device 2 by performing the network measurement based on the flag 1 and/or the flag 2 may be carried in a statistical table 2, and the measurement result obtained by the network device 3 by performing the network measurement based on the flag 2 may be carried in a statistical table 5.

Optionally, information included in any one of the foregoing statistical tables includes at least one of a flow identifier (for example, a 5-tuple, a 3-tuple, or an IP address pair), an ingress/egress interface, and a statistical periodicity identifier. Optionally, the information included in any one of the statistical tables may further include one or more of information such as a quantity of packets, a quantity of bytes, and a timestamp.

In an implementation example, when the flag 1 and the flag 2 carry the path measurement information, the network device 1/2/3 records information about an ingress/egress interface of the data packet on the local device when collecting traffic statistics. The network management system collects statistics results reported by the hop-by-hop devices, and analyzes a forwarding path of the data packet within the network based on the information about the ingress/egress interfaces included in the statistics results.

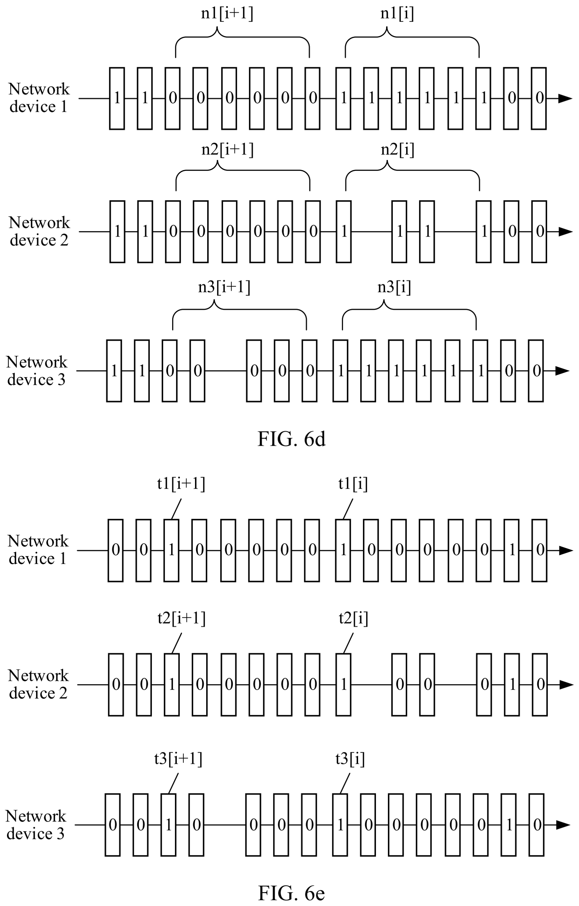

In another implementation example, when the flag 1 and the flag 2 carry packet loss measurement information, the network devices may determine measurement results in a manner shown in FIG. 6d.
(a) The network device 1 marks a packet loss detection flag of each data packet as 0 or 1, performs reversal once per periodicity, collects statistics of a quantity n1[i] of packets whose packet loss detection flags are 1 in an i^{th} periodicity, and collects statistics of a quantity n1[i+1] of packets whose packet loss detection flags are 0 in an (i+1)^{th} periodicity.
(b) The network device 2 collects, based on the packet loss detection flag in the flag 1, statistics of a quantity n2[i] of packets whose packet loss detection flags are 1 in the i^{th} periodicity, and maps the packet loss detection flag (whose value is 1) in the flag 1 to a packet loss detection flag (whose value is 1) in the flag 2. The network device 2 collects statistics of a quantity n2[i+1] of packets whose packet loss detection flags are 0 in the (i+1)^{th} periodicity, and maps the packet loss detection flag (whose value is 0) in the flag 1 to the packet loss detection flag (whose value is 0) in the flag 2.
(c) The network device 3 collects, based on the packet loss detection flag in the flag 2, statistics of a quantity n3[i] of packets whose packet loss detection flags are 1 in the i^{th} periodicity, and collects statistics of a quantity n3[i+1] of packets whose packet loss detection flags are 1 in the (i+1)^{th} periodicity.
(d) The network device 1, the network device 2, and the network device 3 report statistics information of quantities of packets in each periodicity to the network management system (analyzer), and the network management system (analyzer) calculates, based on the quantities of packets in the statistics information, network packet loss information of the data packet forwarded within the network. For example, an analysis result obtained by the network management system (analyzer) is shown in Table 7.

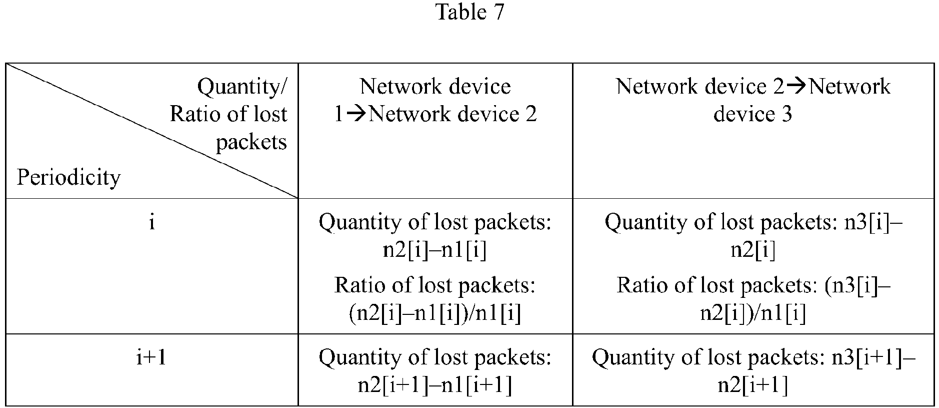

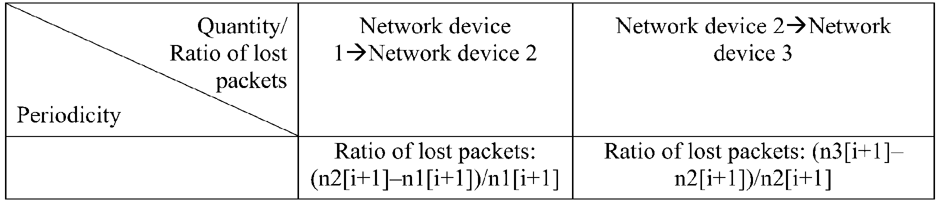

Optionally, in the foregoing implementation process, another device supporting the flag 1 for network measurement may exist between the network device 1 and the network device 2, and another device supporting the flag 2 for network measurement may exist between the network device 2 and the network device 3. The network management system/analyzer also calculates a quantity/ratio of lost packets between the devices based on information about quantities of packets that is reported by the devices.

In another implementation example, when the flag 1 and the flag 2 carry delay measurement information, the network device may determine measurement results in a manner shown in FIG. 6e.
(a) The network device 1 sets a delay detection flag in a flag 1 of a data packet in an i^{th} periodicity to 1, and obtains a timestamp tl [i]; and sets a D dye bit of a data packet in an (i+1)^{th} periodicity to 1, and obtains a timestamp t1[i+1].
(b) The network device 2 receives a service packet with a delay detection flag set to 1 in the flag 1 of the data packet in the i^{th} periodicity, obtains a timestamp t2[i], and maps the delay detection flag (whose value is 1) in the flag 1 to a delay detection flag (whose value is 1) in the flag 2. The network device 2 receives a service packet with a delay detection flag set to 1 in the flag 1 of the data packet in the (i+1)^{th} periodicity, obtains a timestamp t2[i+1], and maps the delay detection flag (whose value is 1) in the flag 1 to the delay detection flag (whose value is 1) in the flag 2.
(c) The network device 3 receives the service packet with the delay detection flag set to 1 in the flag 1 of the data packet in the i^{th} periodicity, and obtains a timestamp t3[i]. The network device 2 receives the service packet with the delay detection flag set to 1 in the flag 1 of the data packet in the (i+1)^{th} periodicity, and obtains a timestamp t3[i+1].
(d) The network device 1, the network device 2, and the network device 3 report statistics information of quantities of packets in each periodicity to the network management system (analyzer), and the network management system (analyzer) calculates, based on timestamp information in the statistics information, a delay of forwarding of the data packet within the network. For example, an analysis result obtained by the network management system (analyzer) is shown in Table 8.

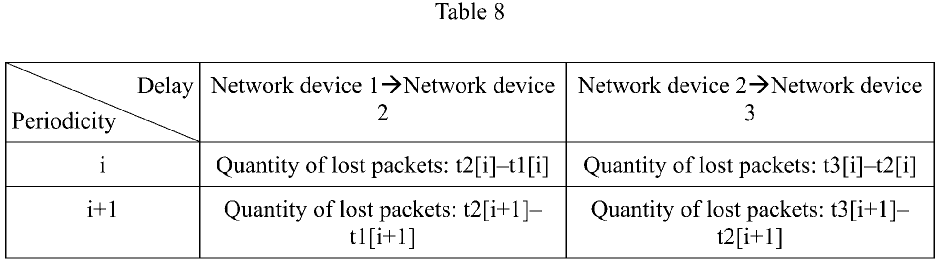

Optionally, in the foregoing implementation process, another device supporting the flag 1 for network measurement may exist between the network device 1 and the network device 2, and another device supporting the flag 2 for network quality measurement may exist between the network device 2 and the network device 3. The network management system/analyzer also calculates a delay between the devices based on timestamp information reported by the devices.

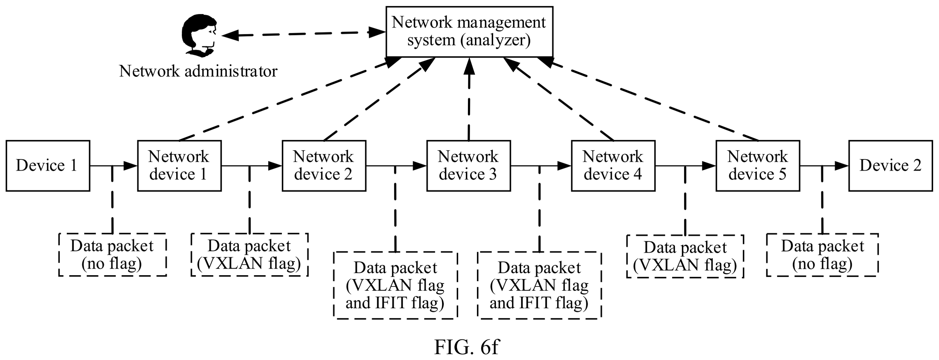

In an application example of the method shown in FIG. 4, the following describes the foregoing implementation process with reference to a scenario shown in FIG. 6f by using an example in which the flag 1 is a VXLAN flag and the flag 2 is an IFIT flag.

As shown in FIG. 6f, a VXLAN tunnel is established between a network device 1 and a network device 5 to support path detection marking by using a VXLAN marking method. A network device 2, a network device 3, and a network device 4 perform forwarding based on an outer IP address of the VXLAN to support path detection marking by using an IFIT marking method. A network administrator performs, by using a packet flag mapping solution, network quality detection on a data packet sent by a device 1 to a device 2. It should be understood that, for an implementation process of each role in FIG. 6f, refer to the foregoing descriptions of FIG. 6a.

Step a: The network administrator configures the network device 1, the network device 2, the network device 3, the network device 4, and the network device 5 by using a network management system (an analyzer) or a command line, and mainly configures information shown in Table 9.

**Table 9**

| Device | Configuration content |
|---|---|
| Network device 1 | Feature of a to-be-detected traffic, marking method (VXLAN), periodicity length, path/packet loss/delay detection switch, and address/port number of the network management system |
| Network device 2 | Source marking method (VXLAN), destination marking method (IFIT), periodicity length, packet loss/delay mapping switch, and address/port number of the network management system |
| Network device 3 | Periodicity length and address/port number of the network management system |
| Network device 4 | Periodicity length and address/port number of the network management system |
| Network device 5 | Periodicity length and address/port number of the network management system |

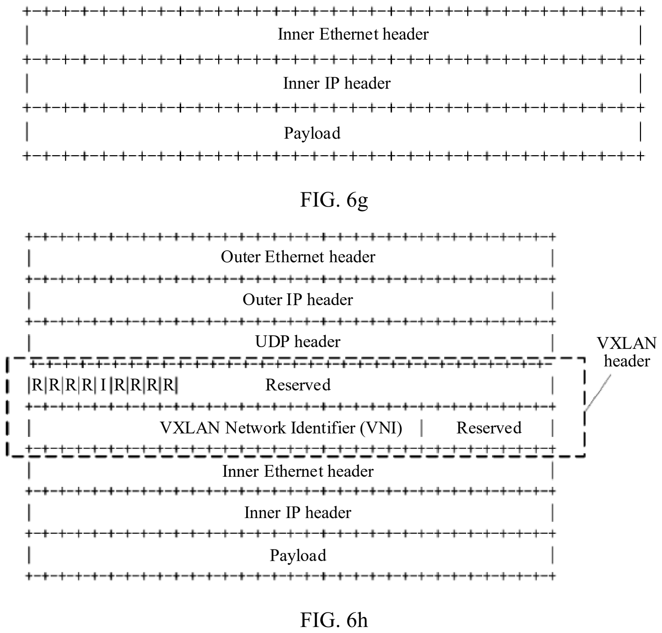

Step b: The device 1 sends, to the network device 1, a data packet whose destination IP address is the device 2 and that carries no path detection flag. For example, a packet format of the data packet that carries no path detection flag is shown in FIG. 6g.

Step c: The network device 1 identifies, based on the configuration of the feature of the to-be-detected traffic, that network quality measurement needs to be performed on the data packet. The network device 1 adds VXLAN packet encapsulation. A packet format after the VXLAN packet encapsulation is added is shown in FIG. 6h.

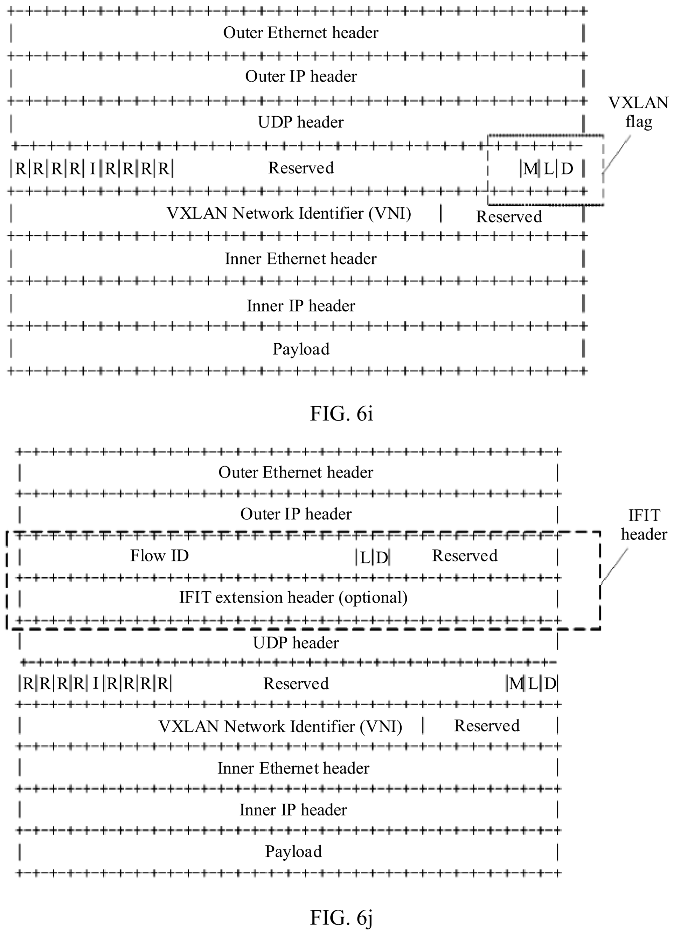

Step d: After adding the VXLAN packet encapsulation, the network device 1 performs packet marking by using a reserved field in the VXLAN header, and adds a path detection flag, a packet loss detection flag, and a delay detection flag. A packet format is shown in FIG. 6i, and a VXLAN flag in the VXLAN header includes an M bit, an L bit, and a D bit.

M bit: The M bit is the path detection flag. The bit is set to 1 for a packet that needs to be detected.

L bit: The L bit is the packet loss detection flag, and the bit is reversed between 0 and 1 to identify two adjacent periodicities. The L bit is set to 1 in the i^{th} periodicity, the L bit is set to 0 in the (i+1)^{th} periodicity, and the L bit is set to 1 in an (i+2)^{th} periodicity.

D bit: The D bit is the delay detection flag. When delay detection is needed, n packets (n≥1) are selected in each periodicity, and D bits are set to 1.

Optionally, the network device 1 may use any bit in the reserved field in the VXLAN header. FIG. 6i is merely an implementation example.

Step e: The network device 1 periodically reverses the packet loss detection flag (L bit), selects one or more packets to set the delay detection flag (D bit) to 1, and collects, by using a method for performing network quality measurement based on flag mapping, traffic statistics of data packets that carries flags.

Step f: The network device 2 receives a packet that carries the VXLAN header and the VXLAN flag, and the network device 2 collects traffic statistics by using the flag in the method for performing network quality measurement based on flag mapping. In addition, the network device 2 identifies, based on the configuration, that the flag in the VXLAN header needs to be mapped to a flag in an IFIT header. The network device 2 identifies, based on the M bit in the VXLAN header, that an IFIT header flag needs to be added to the packet, and maps the L bit and the D bit to an L bit and a D bit in the IFIT header, as shown in FIG. 6j.

It should be understood that a process in which the network device 2 receives the packet carrying the VXLAN flag from the network device 1 in step f is an example of the implementation in which the first device receives the first packet from the third device in FIG. 4. In addition, a process in which the network device 2 sends a packet carrying the IFIT flag to the network device 3 is denoted as an example of the implementation in which the first device sends the second packet to the second device in FIG. 4.

Step g: Then, the network device 2 sends, to the network device 3, a device that carries the VXLAN reserved field flag and the IFIT header flag. The network device 3 performs network quality measurement based on the IFIT header flag, and the network device 3 sends the packet to the network device 4.

Step h: The network device 4 performs network quality measurement by using a method for performing network quality measurement based on the IFIT header flag. Because the network device 5 does not support the network quality measurement based on the IFIT packet flag, the network device 4 removes the IFIT header flag, and sends a packet carrying the VXLAN reserved field flag to the network device 5.

Step i: The network device 5 performs network quality measurement by using a method for performing network quality measurement based on the VXLAN reserved field flag. Then, the network device 5 serves as a VXLAN termination node to remove the VXLAN header encapsulation, and sends the original data packet to the device 2.

Step j: The network device 1/2/3/4/5 periodically sends statistics information to the network management system/analyzer. The network management system (analyzer) presents statistics information of an end-to-end forwarding path/packet loss/delay based on a statistics result sent by the network device 1/2/3/4/5.

It can be learned from FIG. 6f to FIG. 6j and an implementation process of the foregoing steps that a device that supports the VXLAN packet flag and a device that supports the IFIT packet flag are in hybrid networking, and a hop-by-hop and end-to-end path/delay/packet loss detection capability is supported. In addition, the network device 2 maps a dye flag in the VXLAN reserved field to an IFIT packet flag, and collects statistics of a path/packet loss/delay based on a mapped flag. Therefore, different types of devices may use different marking manners when performing in-situ flow network quality measurement. In addition, packet statistics is collected for different types of flags based on a mapping relationship, and statistics results are compared for calculation. In addition, the statistics results of the different devices based on the different types of flags can be compared for calculation and analysis, to calculate forwarding quality of a packet within a network.

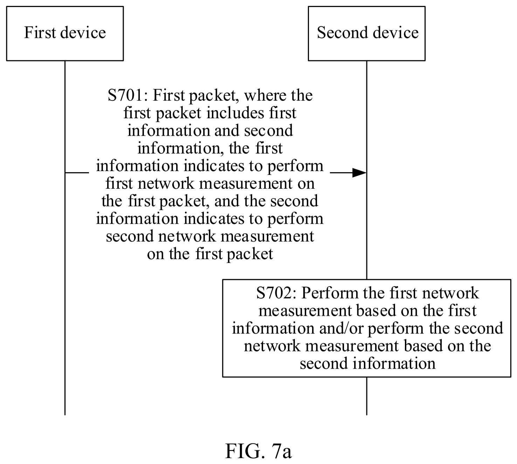

FIG. 7a is a diagram of a communication method according to this application. The method includes the following steps.

S701: A first device sends a first packet. Correspondingly, a second device receives the first packet. The first packet includes first information and second information. The first information indicates to perform first network measurement on the first packet. The second information indicates to perform second network measurement on the first packet. A first position of the first information in the first packet is different from a second position of the second information in the first packet.

S702: The second device performs network measurement. Specifically, the second device performs the first network measurement based on the first information and/or performs the second network measurement based on the second information.

In a possible implementation, the method shown in FIG. 7a further includes: The first device receives a third packet. The third packet does not include the first information and/or the second information. That the first device determines the first packet includes: The first device determines the first packet based on the third packet. Specifically, after the first device receives the third packet that does not include the first information and/or the second information, the first device may determine the first packet based on the third packet, that is, the first device may obtain the first packet after adding the first information and/or the second information to the third packet, so that a receiver of the first packet can subsequently perform the network measurement based on the first information and/or the second information in the first packet.

In a possible implementation, when the third packet does not include the second information and the third packet includes the first information, the first packet includes a first measurement result obtained by processing a measurement result obtained based on the first information. Alternatively, when the third packet does not include the first information and the third packet includes the second information, the first packet includes a second measurement result obtained by processing a measurement result obtained based on the second information. Specifically, after a communication device on a packet transmission path performs network measurement to obtain a measurement result, a packet forwarded by the communication device may include the measurement result. In other words, when the third packet received by the first device includes the first information or the second information, the third packet may include the measurement result obtained based on the first information or the second information. Correspondingly, the first packet determined by the first device based on the third packet may include the first measurement result or the second measurement result obtained through processing based on the measurement result, to avoid a loss of the measurement result and improve network measurement performance.

In an implementation example, as shown in FIG. 3, before step S701, the third packet received by the first device may be from the third device on the packet transmission path. In other words, in a process of forwarding the third packet, the first device may modify the third packet to the first packet, and send the first packet to a next-hop device (for example, the second device) on the packet forwarding path. The third device may be a communication device like a router, a switch, a virtual machine, a virtual switch, or an intelligent network interface card. This is not limited herein. A source device of the third packet may be a server, a personal computer, a virtual machine, or the like. In addition, the source device of the third packet may be the third device, may be a device directly connected to the third device, or may be a device connected to the third device through one or more hops. This is not limited herein.

Optionally, in step S701, the first packet may be determined by the first device based on the received third packet, or the first packet may be a packet locally generated by the first device. That is, the first device may serve as a source device of the first packet.

In a possible implementation, the method further includes: The first device sends a third measurement result to a controller. The third measurement result is obtained based on the first information and/or the second information. Specifically, after a communication device on a packet transmission path performs network measurement to obtain a measurement result, the communication device may send the measurement result to the controller, so that the controller performs, based on measurement results from a plurality of communication devices, network analysis corresponding to the network measurement. Therefore, after the first device performs the network measurement based on the first information and/or the second information to obtain the third measurement result, the first device may send the third measurement result to the controller, so that the controller can subsequently perform network analysis corresponding to the network measurement.

Optionally, the controller is configured to: receive the measurement results measured by the plurality of network devices, and perform the network analysis. The controller may be a device like a server or a virtual machine. The controller may have another name, for example, a network management device, an analyzer, a network analyzer, a network measurement analyzer, or a network quality analyzer.

In a possible implementation, the first information or the second information includes at least one of the following: delay detection information, path detection information, and packet loss detection information. Specifically, the first information or the second information indicating the network measurement may include at least one of the foregoing information, so that the network measurement may include one or more of delay detection, path detection, and packet loss detection, to provide a plurality of network measurement manners.

It should be noted that, when the first information or the second information includes different information content, the first information or the second information may perform network measurement on a packet in a plurality of manners.

In an implementation example, the first information is used as an example. When the first information includes the delay detection information and/or the packet loss detection information, that the first information indicates to perform the first network measurement on the first packet may be understood as that the delay detection information and/or the packet loss detection information in the first information indicate/indicates to perform network measurement for delay detection and/or network measurement for packet loss detection on the first packet.

In another implementation example, the first information is still used as an example. When the first information includes the path detection information, that the first information indicates to perform the first network measurement on the first packet may be understood as that the path detection information in the first information indicates to perform network measurement for path detection on a packet flow (or a data flow) of the first packet.

Optionally, the path detection information is carried in one field (for example, a field in a header) or carried in one header.

Optionally, the delay detection information and the packet loss detection information may be carried in different fields. For example, when the first information or the second information includes the delay detection information, the path detection information, and the packet loss detection information, the three pieces of information may be carried in a same header, that is, the three pieces of information are respectively carried in three different fields in the same header.

In a possible implementation, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header. Specifically, the first position of the first information in the first packet or the second position of the second information in the first packet may be implemented by using any one of the foregoing. In other words, the first information or the second information may be located in one of the foregoing plurality of headers, to improve flexibility of solution implementation.

In a possible implementation, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

Specifically, the first position of the first information in the first packet or the second position of the second information in the first packet may be in one of a plurality of different headers. The first information or the second information may be carried in a corresponding field in the header, to provide specific implementations of the first information and the second information.

In a possible implementation, the method further includes: The first device receives third information. The third information indicates that the next-hop node has a capability of performing the second network measurement based on the second information and/or the third information indicates that the next-hop node has a capability of performing the first network measurement based on the first information. The third information is from the next-hop node or the controller.

Optionally, for the first device, the next-hop node may be the second device described below.

Specifically, the first device may further receive the third information, and determine a capability of the next-hop node based on the third information. Correspondingly, when the first device determines that the next-hop node has the capability of performing the second network measurement based on the second information and/or the next-hop node has the capability of performing the first network measurement based on the first information, the first device may include the first information and the second information in the to-be-sent first packet, so that the next-hop node can perform the network measurement based on the first information and/or the second information, to avoid a measurement failure.

According to the technical solution shown in FIG. 7a, the first packet sent by the first device includes the first information indicating to perform the first network measurement on the first packet. The first packet further includes the second information indicating to perform the second network measurement on the second packet. The first position of the first information in the first packet is different from the second position of the first information in the second packet. In addition, different network measurement technologies are usually indicated by information (for example, fields/headers) at different positions in a packet. In other words, in a packet transmission process, for the first device and/or next M (M is a positive integer) devices of the first device, a device supporting the first network measurement may perform, based on the first information at the first position in the packet, network measurement corresponding to a network measurement technology, and a device supporting the second network measurement may perform, based on the second information at the second position in the packet, network measurement corresponding to another network measurement technology. Therefore, compared with an implementation in which communication devices (for example, forwarding devices) on a path of a packet perform network measurement based only on a same network measurement technology, in the foregoing technical solution, on a packet transmission path, different network measurement technologies are indicated by information at different positions of the packet, so that communication devices on the path can implement network measurement based on the different network measurement technologies.

In addition, for a receiver of the first packet, when the first packet includes the first information and the second information, the receiver can perform, based on a network configuration preference, a capability preference, or the like, at least one of network measurement processes corresponding to the first information and the second information. Compared with the implementation in which the communication devices (for example, the forwarding devices) on the path of the packet perform the network measurement based only on the same network measurement technology, flexibility of network measurement implementation can be improved.

It should be noted that, in the method shown in FIG. 7a, for an implementation of the first information and/or an implementation of the second information, refer to the descriptions in FIG. 4 and the related embodiments.

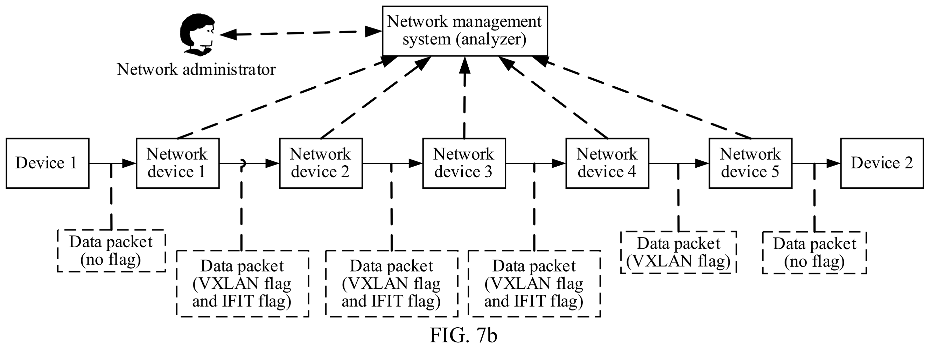

In an application example of the method shown in FIG. 7a, the following describes the foregoing implementation process with reference to a scenario shown in FIG. 7b by using an example in which a flag 1 is a VXLAN flag and a flag 2 is an IFIT flag.

As shown in FIG. 7b, a network device 1 adds both a VXLAN packet flag and an IFIT packet flag when performing VXLAN encapsulation. The network device 1 marks both a VXLAN reserved field and an IFIT packet when marking a packet loss/delay bit, and performs a path/packet loss/delay measurement based on a flag. Therefore, another subsequent network device can perform network measurement based on at least one of the VXLAN packet flag and the IFIT packet flag. In addition, a scenario in which a VXLAN encapsulation node is coupled with an IFIT function node (that is, a scenario in which a same node performs VXLAN encapsulation and also supports the IFIT flag) is supported. In addition, in the foregoing implementation process, the VXLAN flag and the IFIT flag are performed by the same device at the same time, to support a scenario in which VXLAN encapsulation is coupled with a path detection node.

It should be noted that, in the application example shown in FIG. 7b, for an implementation process of each device, refer to the descriptions of FIG. 6f and the related embodiments.

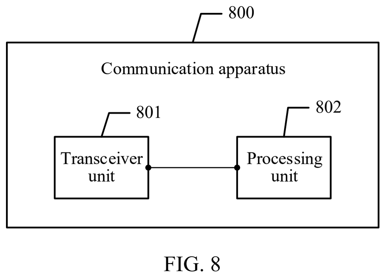

Refer to FIG. 8. An embodiment of this application provides a communication apparatus. The communication apparatus 800 can implement a function of the communication apparatus (namely, the first device or the second device) in the foregoing method embodiments, and therefore can also implement beneficial effects of the foregoing method embodiments.

When the communication apparatus 800 is configured to implement the function of the first device, the communication apparatus includes a transceiver unit 801 and a processing unit 802. The transceiver unit 801 is configured to receive a first packet. The first packet includes first information, and the first information indicates to perform first network measurement on the first packet. The processing unit 802 is configured to determine a second packet based on the first packet. The transceiver unit 801 is further configured to send the second packet. The second packet includes second information, the second information indicates to perform second network measurement on the second packet, and a first position of the first information in the first packet is different from a second position of the second information in the second packet.

In a possible implementation, the second packet further includes the first information, and the first information is at a first position in the second packet.

In a possible implementation, the first packet further includes a first measurement result, and the first measurement result includes a measurement result obtained based on the first information. The second packet further includes a second measurement result, and the second measurement result is obtained by processing the first measurement result.

In a possible implementation, the transceiver unit 801 is further configured to send a third measurement result to a controller. The third measurement result is obtained based on the first information and/or the second information.

In a possible implementation, the first information or the second information includes at least one of the following: delay detection information, path detection information, and packet loss detection information.

In a possible implementation, the path detection information is carried in one field or carried in one header.

In a possible implementation, the first position or the second position is in any one of the following: an internet protocol version 4 IPv4 header, an internet protocol version 6 IPv6 header, a virtual extensible local area network VXLAN header, a generic routing encapsulation GRE header, a generic network virtualization encapsulation GENEVE header, an in-band flow analyzer IFA header, an in-band flow analyzer metadata IFA Metadata header, an in-situ flow information telemetry IFIT header, an in-situ operation, management, and maintenance trace option-types IOAM Trace Option-Types header, an IOAM DEX Option-Type header, an IPv6 extension header, and a GENEVE extension header.

In a possible implementation, the first position and the first information meet any one of the following:
when the first position is in an IPv4 header, the first information is carried in at least one of a differentiated services code point DSCP field, an explicit congestion notification ECN field, or a flags Flags field;
when the first position is in an IPv6 header, the first information is carried in a traffic type Traffic Class field;
when the first position is in a VXLAN header, the first information is carried in at least one of an R bit and a reserved Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an options Options field; or
when the first position is in a GENEVE extension header, the first information is carried in an option data Option Data field.

In a possible implementation, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation, the transceiver unit 801 is further configured to receive third information. The third information indicates that a next-hop node has a capability of performing the second network measurement based on the second information and/or the third information indicates that the next-hop node does not have a capability of performing the first network measurement based on the first information. The third information is from the next-hop node or the controller.

When the communication apparatus 800 is configured to implement the function of the first device, the communication apparatus includes a transceiver unit 801 and a processing unit 802. The processing unit 802 is configured to determine a first packet. The first packet includes first information and second information. The first information indicates to perform first network measurement on the first packet. The second information indicates to perform second network measurement on the first packet. A first position of the first information in the first packet is different from a second position of the second information in the first packet. The transceiver unit 801 is configured to send the first packet.

In a possible implementation, the transceiver unit 801 is further configured to receive a third packet. The third packet does not include the first information and/or the second information. That the processing unit 802 is configured to determine the first packet includes: The processing unit 802 is configured to determine the first packet based on the third packet.

In a possible implementation, when the third packet does not include the second information and the third packet includes the first information, the first packet includes a first measurement result obtained by processing a measurement result obtained based on the first information. Alternatively, when the third packet does not include the first information and the third packet includes the second information, the first packet includes a second measurement result obtained by processing a measurement result obtained based on the second information.

In a possible implementation, the processing unit 802 is further configured to send a third measurement result to a controller. The third measurement result is obtained based on the first information and/or the second information.

In a possible implementation, the first information or the second information includes at least one of the following: delay detection information, path detection information, and packet loss detection information.

In a possible implementation, the path detection information is carried in one field or carried in one header.

In a possible implementation, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

In a possible implementation, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation, the processing unit 802 is further configured to receive third information. The third information indicates that a next-hop node has a capability of performing the second network measurement based on the second information and/or the third information indicates that the next-hop node has a capability of performing the first network measurement based on the first information. The third information is from the next-hop node or the controller.

When the communication apparatus 800 is configured to implement the function of the second device, the communication apparatus includes a transceiver unit 801 and a processing unit 802. The transceiver unit 801 is configured to receive a first packet. The first packet includes first information and second information. The first information indicates to perform first network measurement on the first packet. The second information indicates to perform second network measurement on the first packet. A first position of the first information in the first packet is different from a second position of the second information in the first packet. The processing unit 802 is configured to: perform the first network measurement based on the first information, and/or perform the second network measurement based on the second information.

In a possible implementation, the transceiver unit 801 is further configured to send a second packet based on the first packet. The second packet includes the first information and/or the second information.

In a possible implementation, the first packet further includes a first measurement result and/or a second measurement result. The first measurement result includes a measurement result obtained based on the first information, and the second measurement result includes a measurement result obtained based on the second information. The second packet further includes a third measurement result. The third measurement result is obtained by processing the first measurement result and/or the second measurement result.

In a possible implementation, the transceiver unit 801 is further configured to send a third measurement result to a controller. The third measurement result is obtained based on the first information and/or the second information.

In a possible implementation, the first information or the second information includes at least one of the following: delay detection information, path detection information, and packet loss detection information.

In a possible implementation, the path detection information is carried in one field or carried in one header.

In a possible implementation, the first position or the second position is in any one of the following: an IPv4 header, an IPv6 header, a VXLAN header, a GRE header, a GENEVE header, an IFA header, an IFA Metadata header, an IFIT header, an IOAM Trace Option-Types header, an IOAM DEX Option-Type header, an IPv6 extension header, and a GENEVE extension header.

In a possible implementation, the first position and the first information meet any one of the following:
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field; or
when the first position is in a GENEVE extension header, the first information is carried in an Option Data field.

In a possible implementation, the second position and the second information meet any one of the following:
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

In a possible implementation, the transceiver unit 801 is further configured to send third information. The third information indicates that the second device has a capability of performing the second network measurement based on the second information and/or the third information indicates that the second device has a capability of performing the first network measurement based on the first information.

It should be noted that for details of content such as an information execution process of each unit of the communication apparatus 800, refer to the descriptions in the foregoing method embodiments of this application. Details are not described herein again.

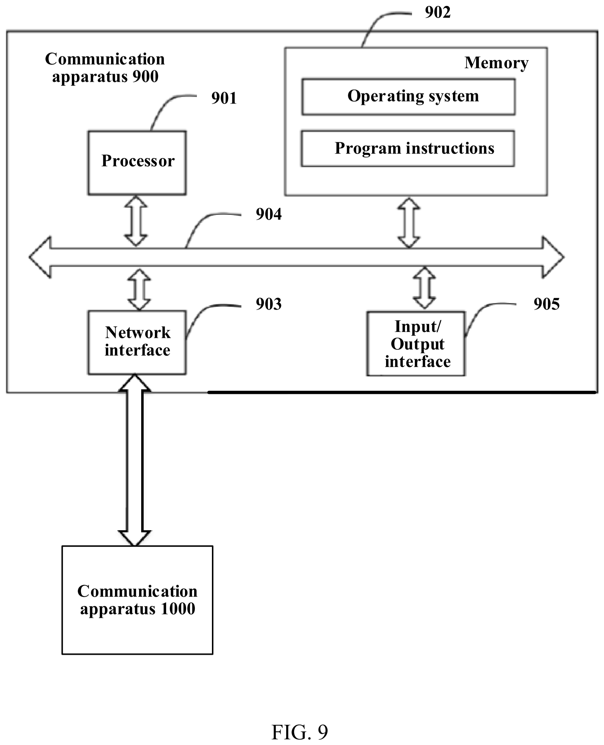

An embodiment of this application further provides a communication apparatus 900. FIG. 9 is a diagram of a structure of the communication apparatus 900 according to this embodiment of this application.

The communication apparatus 900 shown in FIG. 9 includes a memory 902 and at least one processor 901.

Optionally, the processor 901 implements the method in the foregoing embodiments by reading instructions stored in the memory 902, or the processor 901 may implement the method in the foregoing embodiments by executing instructions stored inside. When the processor 901 implements the method in the foregoing embodiments by reading the instructions stored in the memory 902, the memory 902 stores the instructions for implementing the method provided in the foregoing embodiments of this application.

Optionally, the at least one processor 901 is one or more CPUs, a single-core CPU, or a multi-core CPU.

Further, optionally, the at least one processor 901 may be further configured to: perform an implementation process corresponding to the processing unit 802 in the embodiment shown in FIG. 8, and implement corresponding beneficial effects. Details are not described herein again.

The memory 902 includes but is not limited to a RAM, a ROM, an EPROM, a flash memory, an optical memory, or the like. The memory 902 stores instructions of an operating system.

After program instructions stored in the memory 902 are read by the at least one processor 901, the communication apparatus performs a corresponding operation in the foregoing embodiments.

Optionally, the communication apparatus shown in FIG. 9 further includes a network interface 903. The network interface 903 may be a wired interface, for example, an FDDI or a GE interface. Alternatively, the network interface 903 may be a wireless interface. The network interface 903 is configured to: send and receive data in FIG. 3 and the related embodiments.

Further, optionally, the network interface 903 may be further configured to: perform an implementation process corresponding to the transceiver unit 801 in the embodiment shown in FIG. 8, and implement corresponding beneficial effects. Details are not described herein again.

It should be understood that the network interface 903 has a function of receiving data and a function of sending data. The function of "receiving data" and the function of "sending data" may be integrated into a same transceiver interface for implementation, or the function of "receiving data" and the function of "sending data" may be separately implemented through different interfaces. This is not limited herein. In other words, the network interface 903 may include one or more interfaces, configured to implement the function of "receiving data" and the function of "sending data."

For other functions that can be performed by the communication apparatus 900 after the processor 901 reads the program instructions in the memory 902, refer to the descriptions in the foregoing method embodiments.

Optionally, the communication apparatus 900 further includes a bus 904. The processor 901 and the memory 902 are usually connected to each other through the bus 904, or may be connected to each other in another manner.

Optionally, the communication apparatus 900 further includes an input/output interface 905. The input/output interface 905 is configured to: connect to an input device, and receive related configuration information that is input, via an input device, by a user or another device that can interact with the communication apparatus 900. The input device includes but is not limited to a keyboard, a touchscreen, a microphone, and the like.

The communication apparatus 900 provided in this embodiment of this application is configured to: perform the method performed by the communication apparatus (the first device or the second device) provided in the foregoing method embodiments, and implement corresponding beneficial effects.

In an implementation example, the communication apparatus 900 performs a function of the first device in FIG. 4 and the related embodiments. A communication apparatus 1000 performs a function of another device (for example, the second device) in FIG. 4 and the related embodiments. The communication apparatus 900 is configured to receive a first packet. The first packet includes first information, and the first information indicates to perform first network measurement on the first packet. The communication apparatus 900 is configured to determine a second packet based on the first packet. The communication apparatus 900 is further configured to send the second packet to the communication apparatus 1000. The second packet includes second information, the second information indicates to perform second network measurement on the second packet, and a first position of the first information in the first packet is different from a second position of the second information in the second packet.

In another implementation example, the communication apparatus 900 performs a function of the first device in FIG. 7a and the related embodiments. A communication apparatus 1000 performs a function of another device (for example, the second device) in FIG. 7a and the related embodiments. The communication apparatus 900 is configured to determine a first packet. The first packet includes first information and second information. The first information indicates to perform first network measurement on the first packet. The second information indicates to perform second network measurement on the first packet. A first position of the first information in the first packet is different from a second position of the second information in the first packet. The communication apparatus 900 sends the first packet to the communication apparatus 1000.

In another implementation example, the communication apparatus 900 performs a function of the second device in FIG. 7a and the related embodiments. A communication apparatus 1000 performs a function of another device (for example, the first device) in FIG. 7a and the related embodiments. The communication apparatus 900 is configured to receive a first packet from the communication apparatus 1000. The first packet includes first information and second information. The first information indicates to perform first network measurement on the first packet. The second information indicates to perform second network measurement on the first packet. A first position of the first information in the first packet is different from a second position of the second information in the first packet. The communication apparatus 900 is further configured to: perform the first network measurement based on the first information, and/or perform the second network measurement based on the second information.

For a specific implementation of the communication apparatus shown in FIG. 9, refer to the descriptions in the foregoing method embodiments. Details are not described herein again.

An embodiment of this application further provides a communication system. The communication system includes at least the first device configured to perform the foregoing method embodiments, or the communication system includes the first device and the second device configured to perform the foregoing method embodiments.

It should be understood that, in the communication system, each network device may further apply another method in the foregoing embodiments, and implement a corresponding technical effect. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
receiving a first packet, wherein the first packet comprises first information, and the first information indicates to perform first network measurement on the first packet; and
sending a second packet based on the first packet, wherein the second packet comprises second information, the second information indicates to perform second network measurement on the second packet, and a first position of the first information in the first packet is different from a second position of the second information in the second packet.

2. The method according to claim 1, wherein the second packet further comprises the first information, and the first information is at a first position in the second packet.

3. The method according to claim 1 or 2, wherein
the first packet further comprises a first measurement result, and the first measurement result comprises a measurement result obtained based on the first information; and
the second packet further comprises a second measurement result, and the second measurement result is obtained by processing the first measurement result.

4. The method according to claim 1 or 2, wherein the method further comprises:
sending a third measurement result to a controller, wherein the third measurement result is obtained based on the first information and/or the second information.

5. The method according to any one of claims 1 to 4, wherein the first information or the second information comprises at least one of the following:
delay detection information, path detection information, and packet loss detection information.

6. The method according to claim 5, wherein
the path detection information is carried in one field or carried in one header.

7. The method according to any one of claims 1 to 6, wherein the first position or the second position is in at least one of the following:
an internet protocol version 4 IPv4 header, an internet protocol version 6 IPv6 header, a virtual extensible local area network VXLAN header, a generic routing encapsulation GRE header, a generic network virtualization encapsulation GENEVE header, an in-band flow analyzer IFA header, an in-band flow analyzer metadata IFA Metadata header, an in-situ flow information telemetry IFIT header, an in-situ operation, management, and maintenance trace option-types IOAM Trace Option-Types header, an in-situ operation, administration, and maintenance direct exporting option-types IOAM DEX Option-Type header, an IPv6 extension header, and a GENEVE extension header.

8. The method according to any one of claims 1 to 7, wherein
when the first position is in an IPv4 header, the first information is carried in at least one of a differentiated services code point DSCP field, an explicit congestion notification ECN field, or a flags Flags field;
when the first position is in an IPv6 header, the first information is carried in a traffic class Traffic Class field;
when the first position is in a VXLAN header, the first information is carried in at least one of an R bit and a reserved Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an options Options field;
when the first position is in a GENEVE extension header, the first information is carried in an option data Option Data field;
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit; when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

9. The method according to any one of claims 1 to 8, wherein the method further comprises:
receiving third information, wherein the third information indicates that a next-hop node has a capability of performing the second network measurement based on the second information and/or the third information indicates that the next-hop node does not have a capability of performing the first network measurement based on the first information, and the third information is from the next-hop node or the controller.

10. A communication method, comprising:
determining a first packet, wherein the first packet comprises first information and second information, the first information indicates to perform first network measurement on the first packet, the second information indicates to perform second network measurement on the first packet, and a first position of the first information in the first packet is different from a second position of the second information in the first packet; and
sending the first packet.

11. The method according to claim 10, wherein the method further comprises:
receiving a third packet, wherein the third packet does not comprise the first information and/or the second information; and
determining the first packet comprises:
determining the first packet based on the third packet.

12. The method according to claim 11, wherein
when the third packet does not comprise the second information and the third packet comprises the first information, the first packet comprises a first measurement result obtained by processing a measurement result obtained based on the first information; or
when the third packet does not comprise the first information and the third packet comprises the second information, the first packet comprises a second measurement result obtained by processing a measurement result obtained based on the second information.

13. The method according to any one of claims 10 to 12, wherein the method further comprises:
sending a third measurement result to a controller, wherein the third measurement result is obtained based on the first information and/or the second information.

14. The method according to any one of claims 10 to 13, wherein the first information or the second information comprises at least one of the following:
delay detection information, path detection information, and packet loss detection information.

15. The method according to claim 14, wherein
the path detection information is carried in one field or carried in one header.

16. The method according to any one of claims 10 to 15, wherein the first position or the second position is in at least one of the following:
an internet protocol version 4 IPv4 header, an internet protocol version 6 IPv6 header, a virtual extensible local area network VXLAN header, a generic routing encapsulation GRE header, a generic network virtualization encapsulation GENEVE header, an in-band flow analyzer IFA header, an in-band flow analyzer metadata IFA Metadata header, an in-situ flow information telemetry IFIT header, an in-situ operation, management, and maintenance trace option-types IOAM Trace Option-Types header, an in-situ operation, administration, and maintenance direct exporting option-types IOAM DEX Option-Type header, an IPv6 extension header, and a GENEVE extension header.

17. The method according to any one of claims 10 to 16, wherein
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field;
when the first position is in a GENEVE extension header, the first information is carried in an Option Data field;
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit; when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

18. The method according to any one of claims 10 to 17, wherein the method further comprises:
receiving third information, wherein the third information indicates that a next-hop node has a capability of performing the second network measurement based on the second information and/or the third information indicates that the next-hop node has a capability of performing the first network measurement based on the first information, and the third information is from the next-hop node or the controller.

19. A communication method, comprising:
receiving a first packet, wherein the first packet comprises first information and second information, the first information indicates to perform first network measurement on the first packet, the second information indicates to perform second network measurement on the first packet, and a first position of the first information in the first packet is different from a second position of the second information in the first packet; and
performing the first network measurement based on the first information and/or performing the second network measurement based on the second information.

20. The method according to claim 19, wherein the method further comprises:
sending a second packet based on the first packet, wherein the second packet comprises the first information and/or the second information.

21. The method according to claim 20, wherein
the first packet further comprises a first measurement result and/or a second measurement result, the first measurement result comprises a measurement result obtained based on the first information, and the second measurement result comprises a measurement result obtained based on the second information; and
the second packet further comprises a third measurement result, and the third measurement result is obtained by processing the first measurement result and/or the second measurement result.

22. The method according to claim 19 or 20, wherein the method further comprises:
sending a third measurement result to a controller, wherein the third measurement result is obtained based on the first information and/or the second information.

23. The method according to any one of claims 19 to 22, wherein the first information or the second information comprises at least one of the following:
delay detection information, path detection information, and packet loss detection information.

24. The method according to claim 23, wherein
the path detection information is carried in one field or carried in one header.

25. The method according to any one of claims 19 to 24, wherein the first position or the second position is in at least one of the following:
an internet protocol version 4 IPv4 header, an internet protocol version 6 IPv6 header, a virtual extensible local area network VXLAN header, a generic routing encapsulation GRE header, a generic network virtualization encapsulation GENEVE header, an in-band flow analyzer IFA header, an in-band flow analyzer metadata IFA Metadata header, an in-situ flow information telemetry IFIT header, an in-situ operation, management, and maintenance trace option-types IOAM Trace Option-Types header, an in-situ operation, administration, and maintenance direct exporting option-types IOAM DEX Option-Type header, an IPv6 extension header, and a GENEVE extension header.

26. The method according to any one of claims 19 to 25, wherein
when the first position is in an IPv4 header, the first information is carried in at least one of a DSCP field, an ECN field, or a Flags field;
when the first position is in an IPv6 header, the first information is carried in a Traffic Class field;
when the first position is in a VXLAN header, the first information is carried in at least one of an R bit and a Reserved field;
when the first position is in a GRE header, the first information is carried in at least one of a Reserved0 field and a Reserved1 field;
when the first position is in a GENEVE header, the first information is carried in a Reserved field;
when the first position is in an IFA header, the first information is carried in an R bit;
when the first position is in an IFA Metadata header, the first information is carried in at least one of an L bit, a C bit, and an R bit;
when the first position is in an IFIT header, the first information is carried in at least one of an L bit, a D bit, and a Reserved field;
when the first position is in an IOAM Trace Option-Types header, the first information is carried in at least one of a Flags field and a Reserved field;
when the first position is in an IOAM DEX Option-Type header, the first information is carried in at least one of a Flags field and a Reserved field;
when the first position is in an IPv6 extension header, the first information is carried in an Options field;
when the first position is in a GENEVE extension header, the first information is carried in an Option Data field;
when the second position is in an IPv4 header, the second information is carried in at least one of a DSCP field, an ECN field, or a Flags field;
when the second position is in an IPv6 header, the second information is carried in a Traffic Class field;
when the second position is in a VXLAN header, the second information is carried in at least one of an R bit and a Reserved field;
when the second position is in a GRE header, the second information is carried in at least one of a Reserved0 field and a Reserved1 field;
when the second position is in a GENEVE header, the second information is carried in a Reserved field;
when the second position is in an IFA header, the second information is carried in an R bit;
when the second position is in an IFA Metadata header, the second information is carried in at least one of an L bit, a C bit, and an R bit;
when the second position is in an IFIT header, the second information is carried in at least one of an L bit, a D bit, and a Reserved field;
when the second position is in an IOAM Trace Option-Types header, the second information is carried in at least one of a Flags field and a Reserved field;
when the second position is in an IOAM DEX Option-Type header, the second information is carried in at least one of a Flags field and a Reserved field;
when the second position is in an IPv6 extension header, the second information is carried in an Options field; or
when the second position is in a GENEVE extension header, the second information is carried in an Option Data field.

27. The method according to any one of claims 19 to 26, wherein the method further comprises:
sending third information, wherein the third information indicates that a second device has a capability of performing the second network measurement based on the second information and/or the third information indicates that the second device has a capability of performing the first network measurement based on the first information.

28. A communication apparatus, comprising a transceiver unit and a processing unit, wherein
the transceiver unit and the processing unit are configured to perform the method according to any one of claims 1 to 9; or the transceiver unit and the processing unit are configured to perform the method according to any one of claims 10 to 18; or the transceiver unit and the processing unit are configured to perform the method according to any one of claims 19 to 27.

29. A communication apparatus, comprising at least one processor, wherein the at least one processor is coupled to a memory;
the memory is configured to store a program or instructions; and
the at least one processor is configured to execute the program or the instructions, to enable the communication apparatus to implement the method according to any one of claims 1 to 9, or enable the communication apparatus to implement the method according to any one of claims 10 to 18, or enable the communication apparatus to implement the method according to any one of claims 19 to 27.

30. A computer-readable storage medium, wherein the medium stores instructions, and when the instructions are executed by a processor, the method according to any one of claims 1 to 27 is implemented.

31. A computer program product, comprising instructions, wherein when the instructions are run on a processor, the method according to any one of claims 1 to 27 is implemented.

32. A communication system, wherein the communication system comprises a first device, and the first device is configured to perform the method according to any one of claims 1 to 9; or the communication system comprises a first device and a second device, the first device is configured to perform the method according to any one of claims 10 to 18, and the second device is configured to perform the method according to any one of claims 19 to 27.
